(19) Europäisches Patentamt
European Patent Office
Office européen des brevets

(11) EP 3 030 589 B1

(12) **FASCICULE DE BREVET EUROPEEN**

(45) Date de publication et mention de la délivrance du brevet:
**13.06.2018 Bulletin 2018/24**

(21) Numéro de dépôt: **14747619.6**

(22) Date de dépôt: **31.07.2014**

(51) Int Cl.:
***C08C 19/25*** *(2006.01)* ***C08C 19/44*** *(2006.01)*
***C08L 15/00*** *(2006.01)*

(86) Numéro de dépôt international:
**PCT/EP2014/066553**

(87) Numéro de publication internationale:
**WO 2015/018743 (12.02.2015 Gazette 2015/06)**

# (54) ELASTOMÈRE DIÉNIQUE MODIFIÉ, SON PROCÉDÉ DE SYNTHÈSE ET COMPOSITION DE CAOUTCHOUC LE COMPRENANT

MODIFIZIERTES DIENELASTOMER, SYNTHESEVERFAHREN DAFÜR UND KAUTSCHUKZUSAMMENSETZUNG DAMIT

DIENE ELASTOMER MODIFIED, SYNTHESIS METHOD FOR SAME AND RUBBER COMPOSITION COMPRISING IT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.08.2013 FR 1357887**

(43) Date de publication de la demande:
**15.06.2016 Bulletin 2016/24**

(73) Titulaire: **Compagnie Générale des Etablissements Michelin**
**63000 Clermont-Ferrand (FR)**

(72) Inventeurs:
- **DIRE, Charlotte**
  **F-63040 Clermont-Ferrand Cedex 9 (FR)**
- **MARECHAL, Jean-Marc**
  **F-63040 Clermont-Ferrand Cedex 9 (FR)**
- **DORATO, Margarita**
  **F-63040 Clermont-Ferrand Cedex 9 (FR)**
- **MANCEAU, Mathieu**
  **F-63040 Clermont-Ferrand Cedex 9 (FR)**
- **PACHECO, Nuno**
  **F-63040 Clermont-Ferrand Cedex 9 (FR)**

(74) Mandataire: **Le Cam, Véronique Marie Christine et al**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2009/077837**
**FR-A1- 2 930 554**
**FR-A1- 2 951 178**
**US-A1- 2008 319 151**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 030 589 B1

## Description

La présente invention est relative à un élastomère diénique modifié par un groupement alcoxysilane, éventuellement partiellement ou totalement hydrolysé, porteur, le cas échéant, d'une autre fonction susceptible d'interagir avec une charge renforçante au sein d'une composition de caoutchouc. La présente invention concerne également une composition de caoutchouc renforcée, utilisable notamment pour la fabrication de pneumatiques, comprenant cet élastomère.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la constitution des pneumatiques. Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation dans le but d'obtenir une bonne interaction entre le polymère ainsi modifié et la charge, qu'il s'agisse du noir de carbone ou d'une charge inorganique renforçante. Il a notamment été proposé d'utiliser des polymères diéniques fonctionnalisés par des dérivés alcoxysilanes.

A titre d'illustration de cet art antérieur relatif à des charges inorganiques renforçantes, on peut par exemple citer le brevet américain US-A-5 066 721, qui décrit une composition de caoutchouc comprenant un polymère diénique fonctionnalisé par un alcoxysilane ayant au moins un reste alcoxyle non hydrolysable en mélange avec de la silice. On peut également citer la demande de brevet EP A 0 299 074 qui décrit des polymères fonctionnalisés comportant des fonctions alcoxysilanes en bout de chaîne. Ces polymères fonctionnalisés ont été décrits dans l'art antérieur comme efficaces pour réduire l'hystérèse et améliorer la tenue à l'abrasion, cependant leurs propriétés restent insuffisantes pour permettre la mise en oeuvre de ces polymères dans des compositions destinées à constituer des bandes de roulement de pneumatiques.

Il a également été proposé de combiner la fonctionnalisation par des fonctions alcoxysilanes à la fonctionnalisation par d'autres fonctions, notamment la fonction amine, ceci est illustré dans les brevets FR2930554 et US2008/0319151. Ainsi, le brevet EP 0 992 537 décrit une composition de caoutchouc qui comprend un élastomère étendu modifié en bout de chaîne par une fonction alcoxysilane et portant à l'autre extrémité ou le long de sa chaîne une ou plusieurs fonctions amine. Par ailleurs, il a également été proposé d'améliorer les propriétés des compositions de caoutchouc en utilisant des élastomères fonctionnalisés en bout de chaîne par des fonctions alcoxysilanes portant un groupement amine, que ce soit en mélange noir, silice ou hybride. On peut citer, par exemple, la demande de brevet US 2005/0203251 qui décrit une composition de caoutchouc renforcée par de la silice contenant un élastomère fonctionnalisé en bout de chaîne par un alcoxysilane portant un groupement amine. Néanmoins, il s'avère que les compositions contenant des élastomères ainsi modifiés, qu'il s'agisse de mélange noir, silice ou hybride, ne présentent pas toujours une mise en oeuvre acceptable et une hystérèse satisfaisante pour une utilisation en bande de roulement pour pneumatique.

Les Demanderesses ont décrit dans le document WO 2009133068 A1 un élastomère diénique fonctionnalisé essentiellement constitué par l'espèce couplée d'un élastomère possédant au sein de la chaîne un groupement porteur d'une fonction alcoxysilane et d'une fonction amine, l'atome de silicium de ce groupement liant les deux parties de la chaîne de l'élastomère diénique. Cet élastomère fonctionnalisé confère à la composition le contenant des propriétés mécaniques et dynamiques améliorées, notamment une hystérèse améliorée, tout en conservant une mise en oeuvre à cru satisfaisante, en vue notamment d'une utilisation en bande de roulement pour pneumatique.

Il est une préoccupation constante des concepteurs de matériaux destinés à la fabrication de pneumatiques d'améliorer les compromis de propriétés mécaniques et dynamiques des compositions de caoutchouc en vue d'améliorer les performances du pneumatique les contenant, sans pour autant pénaliser les étapes de sa fabrication ou les propriétés de l'élastomère. Ainsi, par exemple, l'amélioration du compromis de propriétés ne doit pas se faire au détriment du fluage à froid de l'élastomère qui entraîne des inconvénients importants lors du transport et du stockage des caoutchoucs.

Il a déjà été proposé par le passé d'ajouter des élastomères couplés ou étoilés à l'aide d'agents de couplage ou d'étoilage supplémentaires à l'étain ou au silicium pour modérer le fluage à froid. Ainsi par exemple, la demande de brevet WO 2009/077837 décrit des élastomères fonctionnalisés à chaque extrémité de chaîne associés à des élastomères étoilés, particulièrement par du silicium. Toutefois, les associations illustrées conduisent à une composition de caoutchouc renforcée dont le compromis de propriétés mise en oeuvre / hystérèse n'est pas satisfaisant pour une application en pneumatique. Les Demanderesses ont décrit dans la demande de brevet WO 2011/042507 un élastomère diénique fonctionnalisé composé d'un élastomère diénique fonctionnalisé en une extrémité de chaîne par une fonction silanol et, dans une certaine proportion, d'un élastomère diénique couplé ou étoilé à base d'étain. Cet élastomère confère à une composition de caoutchouc le contenant des propriétés hystérétiques et de mise en oeuvre tout à fait satisfaisantes et acceptables pour une utilisation en pneumatique, tout en présentant une résistance au fluage à froid significativement améliorée.

Le problème technique que se propose de résoudre l'invention est d'améliorer encore le compromis de propriété hystérèse et mise en oeuvre d'une composition de caoutchouc en vue d'une application en pneumatique, sans pénaliser sa fabrication ou les propriétés de l'élastomère contenu dans cette composition, notamment sa résistance au fluage à froid.

Les Inventeurs ont maintenant mis en évidence qu'un élastomère diénique majoritairement couplé de composition spécifique comprenant notamment certaines proportions d'espèce étoilée et obtenu par réaction avec un composé trialcoxysilane porteur ou non d'une autre fonction susceptible d'interagir avec une charge renforçante, confère aux compositions de caoutchouc le contenant une amélioration remarquable et inattendue du compromis mise en oeuvre à cru / hystérèse, tout en préservant un fluage à froid satisfaisant de l'élastomère.

L'invention a donc pour objet un élastomère diénique modifié à base

a) d'au moins 55% en poids par rapport au poids total de l'élastomère diénique modifié, d'espèce couplée par un groupement fonctionnel porteur d'une fonction de formule -SiOR, dans laquelle R est un atome d'hydrogène ou un radical alkyle ayant 1 à 10 atomes de carbone, et éventuellement d'une autre fonction susceptible d'interagir avec une charge renforçante, le groupement étant lié aux deux branches de l'élastomère diénique par l'intermédiaire de l'atome de silicium,

b) de 5% en poids à 30% en poids par rapport au poids total de l'élastomère diénique modifié, d'espèce étoilée possédant trois branches élastomériques reliées à un même atome de silicium appartenant à un groupement fonctionnel porteur ou non d'une autre fonction susceptible d'interagir avec une charge renforçante,

c) d'un taux inférieur ou égal à 15% en poids par rapport au poids total de l'élastomère diénique modifié, d'espèce fonctionnalisée en extrémité de chaîne par un groupement fonctionnel porteur d'une fonction de formule $-Si(OR)_2$, dans laquelle R est un atome d'hydrogène ou un radical alkyle ayant 1 à 10 atomes de carbone, et éventuellement d'une autre fonction susceptible d'interagir avec une charge renforçante, le groupement étant lié à l'élastomère diénique par l'intermédiaire de l'atome de silicium, et

d) d'un taux inférieur ou égal à 15% en poids par rapport au poids total de l'élastomère diénique modifié d'élastomère diénique non fonctionnel,

lesdits élastomères diéniques a), b) c) et d) étant, avant modification, de mêmes macrostructure et microstructure.

L'invention a également pour objet un procédé de synthèse dudit élastomère diénique modifié.

Un autre objet de l'invention est une composition de caoutchouc renforcée à base au moins d'une charge renforçante et d'une matrice élastomère comprenant au moins ledit élastomère diénique modifié.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Il convient de préciser qu'il est connu de l'homme du métier que lorsqu'on modifie un élastomère par réaction d'un agent de fonctionnalisation sur l'élastomère vivant issu d'une étape de polymérisation anionique, on obtient un mélange d'espèces modifiées de cet élastomère dont la composition dépend notamment de la proportion de sites réactifs de l'agent de fonctionnalisation par rapport au nombre de chaînes vivantes. Ce mélange comprend des espèces fonctionnalisées en extrémité de chaîne, couplées, étoilées et/ou non fonctionnalisées.

Dans la présente description, on entend par élastomère diénique modifié un élastomère diénique qui comporte un groupement fonctionnel comprenant au moins un atome de silicium et éventuellement une fonction susceptible d'interagir avec une charge renforçante, et qui est issu de la modification au moyen d'un agent de fonctionnalisation de type trialcoxysilane porteur ou non d'une autre fonction susceptible d'interagir avec une charge renforçante. C'est généralement un élastomère obtenu par réaction d'un élastomère diénique vivant issu de l'étape de polymérisation anionique sur l'agent de fonctionnalisation en question.

Lorsque le groupement se situe en bout de chaîne, on dira alors que l'élastomère diénique est fonctionnalisé en bout ou extrémité de chaîne.

Lorsque le groupement se situe dans la chaîne élastomère principale linéaire, on dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. L'atome de silicium de ce groupement lie les deux branches de la chaîne de l'élastomère diénique.

Lorsque le groupement est central auquel trois chaînes ou branches élastomères sont liées formant une structure en étoile de l'élastomère, on dira alors que l'élastomère diénique est étoilé. L'atome de silicium de ce groupement lie les trois branches de l'élastomère diénique modifié entre elles.

Ainsi, l'invention a pour objet un élastomère diénique modifié composé des espèces a), b), c) et d) dans les proportions indiquées précédemment.

Concernant l'espèce étoilée b), l'élastomère diénique modifié comprend de préférence au moins 10% en poids par rapport au poids total de l'élastomère diénique modifié de ladite espèce étoilée b). Préférentiellement également, l'élastomère diénique modifié comprend au plus 25%, de préférence encore au plus 20% en poids par rapport au poids total de l'élastomère diénique modifié de ladite espèce étoilée b).

Concernant l'espèce non fonctionnelle d), l'élastomère diénique modifié comprend de préférence un taux strictement supérieur à 0% en poids et inférieur à 10% en poids, par rapport au poids total de l'élastomère diénique modifié de ladite espèce non fonctionnelle d).

Concernant l'espèce couplée a), l'élastomère diénique modifié comprend de préférence un taux supérieur ou égal à 65%, voire supérieur ou égal à 70%, en poids par rapport au poids total de l'élastomère diénique modifié de ladite espèce couplée a).

Concernant l'espèce fonctionnalisée en extrémité de chaîne c), l'élastomère diénique modifié comprend de préférence un taux inférieur ou égal à 10% en poids, par rapport au poids total de l'élastomère diénique modifié de ladite espèce fonctionnalisée en extrémité de chaîne c).

Les aspects préférentiels concernant les espèces a), b), c) et d) sont combinables entre eux.

Par élastomère diénique, on entend selon l'invention tout homopolymère obtenu par polymérisation d'un monomère diène conjugué ayant de 4 à 12 atomes de carbone, ou tout copolymère à bloc, statistique, séquencé ou microséquencé, obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20% à 99% en poids d'unités diéniques, et de 1% à 80% en poids d'unités vinylaromatiques.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène, etc. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène, etc.

A titre préférentiel, l'élastomère diénique est choisi parmi les polybutadiènes, les copolymères butadiène-styrène, les copolymères butadiène-styrène-isoprène, les copolymères styrène-isoprène, les copolymères butadiène-isoprène et le polyisoprène de synthèse. Avantageusement, l'élastomère diénique est un copolymère butadiène-styrène.

Selon des variantes de l'invention, l'élastomère diénique modifié ne comporte pas d'autre fonction que celle comprenant l'atome de silicium directement lié à la chaîne élastomérique.

Selon d'autres variantes de l'invention, l'élastomère diénique modifié comporte également une autre fonction susceptible d'interagir avec une charge renforçante, cette fonction étant portée par le groupement contenant l'atome de silicium. Ces variantes s'entendent comme n'excluant pas le fait que la fonction comprenant l'atome de silicium directement lié à la chaîne élastomérique interagit de manière privilégiée avec la charge renforçante.

On entend par "groupement" ou "fonction susceptible d'interagir avec une charge renforçante", tout groupement ou fonction capable de former, au sein d'une composition de caoutchouc renforcée au moyen d'une charge, une liaison physique ou chimique avec ladite charge. Cette interaction peut s'établir par exemple par le biais de liaisons covalentes, hydrogène, ioniques et/ou électrostatiques entre ladite fonction et des fonctions présentes sur des charges.

Par fonction susceptible d'interagir avec une charge renforçante, on entend de préférence des fonctions comprenant au moins un hétéroatome choisi parmi N, S, O, P. On peut, à titre d'exemple, citer parmi ces fonctions les amines primaires, secondaires ou tertiaires, cycliques ou non, les isocyanates, les imines, les cyano, les thiols, les carboxylates, les époxydes, les phosphines primaires, secondaires ou tertiaires.

Ainsi, à titre de fonction amine secondaire ou tertiaire, on peut citer les amines substituées par des radicaux alkyle en $C_1$-$C_{10}$, de préférence alkyle en $C_1$-$C_4$, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements métylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

A titre de fonction imine, on peut citer les cétimines. Par exemple, conviennent les groupements (1,3-diméthylbutylidène)amino-, (éthylidène)amino-, (1-méthylpropylidène)amino-, (4-N,N-diméthylaminobenzylidène)amino-, (cyclohexylidène)amino-, dihydroimidazole et imidazole.

Ainsi, à titre de fonction carboxylate, on peut citer les acrylates ou les méthacrylates. Une telle fonction est de préférence un méthacrylate.

A titre de fonction époxyde, on peut citer les groupements époxy ou glycidyloxy.

A titre de fonction phosphine secondaire ou tertiaire, on peut citer les phosphines substituées par des radicaux alkyle en $C_1$-$C_{10}$, de préférence alkyle en $C_1$-$C_4$, plus préférentiellement un radical méthyle ou éthyle, ou alors la

diphénylphosphine. Par exemple, conviennent les groupements métylphosphino-, diméthylphosphino-, éthylphosphino-, diéthylphosphino, éthylméthylphosphino- et diphénylphosphino-.

Selon des variantes de l'invention, l'autre fonction susceptible d'interagir avec une charge renforçante est directement liée à l'atome de silicium lui-même directement lié à l'élastomère diénique.

Selon d'autres variantes de l'invention, l'autre fonction susceptible d'interagir avec une charge renforçante et l'atome de silicium directement lié à l'élastomère diénique sont liés par l'intermédiaire d'un groupement espaceur qui peut être un atome ou un groupe d'atomes. Le groupement espaceur peut être un radical hydrocarboné divalent, linéaire ou ramifié, aliphatique en $C_1$-$C_{18}$, saturé ou non, cyclique ou non, ou un radical hydrocarboné divalent aromatique en $C_6$-$C_{18}$ et peut contenir un ou plusieurs radicaux aromatiques et/ou un ou plusieurs hétéroatomes. Le radical hydrocarboné peut éventuellement être substitué.

Selon des variantes préférées de l'invention, le groupement espaceur est un radical hydrocarboné divalent, linéaire ou ramifiée, aliphatique en $C_1$-$C_{10}$, plus préférentiellement un radical hydrocarboné divalent linéaire aliphatique en $C_1$-$C_6$, plus préférentiellement encore le radical hydrocarboné divalent linéaire en $C_3$.

Les différents aspects, préférentiels ou non, qui précèdent et qui concernent notamment la nature de l'autre fonction susceptible d'interagir avec une charge renforçante, la nature du groupement espaceur, la nature de l'élastomère diénique, la nature de la fonction comprenant l'atome de silicium et les proportions des différentes espèces, sont combinables entre eux.

Selon des variantes avantageuses de l'invention, au moins une des quatre caractéristiques suivantes est respectée et de préférence les quatre :

- l'autre fonction susceptible d'interagir avec une charge renforçante est une amine tertiaire, plus particulièrement un groupement diéthylamino- ou diméthylamino-.
- le groupement espaceur est un radical hydrocarboné linéaire en $C_1$-$C_6$, plus préférentiellement encore le radical hydrocarboné linéaire en $C_3$.
- dans les formules -SiOR et -Si(OR)$_2$, R est atome d'hydrogène ou un radical alkyle ayant 1 à 4 atomes de carbone, de préférence méthyle ou éthyle.
- l'élastomère diénique est un copolymère butadiène-styrène.

L'élastomère diénique modifié selon l'invention peut être préparé selon un procédé incluant la modification de l'élastomère par réaction d'un élastomère diénique vivant sur un agent de type trialcoxysilane porteur ou non d'une autre fonction susceptible d'interagir avec une charge renforçante, connu par l'homme de l'art pour réagir avec un bout de chaîne élastomérique vivante. Selon l'invention, le procédé peut être continu ou discontinu.

Un tel procédé de synthèse, comprend les étapes suivantes:

- polymérisation anionique d'au moins un monomère diène conjugué en présence d'un initiateur de polymérisation,
- modification de l'élastomère diénique vivant porteur d'un site actif obtenu à l'étape précédente par un agent de fonctionnalisation, non polymérisable, de type trialcoxysilane, les fonctions alcoxy étant hydrolysables ou non en fonction silanol, éventuellement porteur d'une autre fonction susceptible d'interagir avec une charge renforçante, ledit agent de fonctionnalisation se liant en extrémité de chaîne à au moins une chaîne vivante de l'élastomère par son atome de silicium.

En tant qu'initiateur de polymérisation, on peut utiliser tout initiateur anionique monofonctionnel connu. Toutefois un initiateur contenant un métal alcalin tel que le lithium est utilisé à titre préférentiel. Comme initiateurs organolithiens conviennent notamment ceux comportant une liaison carbone-lithium et une liaison azote-lithium. Des composés représentatifs sont les organolithiens aliphatiques tels que l'éthyllithium, le n-butyllithium (n-BuLi), l'isobutyllithium, les amidures de lithium obtenus à partir d'une amine secondaire cyclique, telle que la pyrrolidine et l'hexaméthylèneimine.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La polymérisation peut être effectuée en continu ou en discontinu, en dispersion ou en solution. On effectue généralement la polymérisation à une température comprise entre 20 °C et 150 °C et de préférence voisine de 30 °C à 110 °C.

L'élastomère diénique peut avoir toute microstructure qui est fonction des conditions de polymérisation utilisées. L'élastomère peut être à blocs, statistiques, séquencés, microséquencés, etc.... La microstructure de cet élastomère peut être déterminée par la présence ou non d'un agent modifiant et/ou randomisant et les quantités d'agent modifiant et/ou randomisant employées.

L'élastomère diénique vivant issu de la polymérisation est ensuite modifié pour préparer l'élastomère diénique

modifié selon l'invention par réaction sur l'agent de fonctionnalisation.

Le temps de réaction entre l'élastomère diénique vivant issu de la polymérisation et l'agent de fonctionnalisation peut être compris entre 10 secondes et 2 heures.

L'homme du métier saura déterminer les conditions opératoires de la réaction de modification pour aboutir à la composition de l'élastomère diénique modifié souhaitée.

Selon une variante de préparation, l'élastomère diénique modifié selon l'invention est obtenu par mélangeage d'au moins deux élastomères diéniques de même nature, modifiés par le même agent de fonctionnalisation, et présentant une composition différente, afin d'obtenir les taux visés en espèces couplée, étoilée, fonctionnalisée en bout de chaîne et non fonctionnelle.

Le taux en espèce non fonctionnelle dans le mélange peut être réglé en ajoutant un élastomère diénique non fonctionnel dont la polymérisation est stoppée, par exemple par adjonction de méthanol, et qui ne subit pas d'étape de modification directement au mélange ou à chaque élastomère diénique avant mélangeage.

Les élastomères diéniques modifiés de composition différente du mélange sont respectivement obtenus en mettant en oeuvre l'étape de modification en faisant varier le rapport molaire de l'agent de fonctionnalisation à l'initiateur de polymérisation. Ainsi, avec un rapport allant de 0,40 à 0,75, préférentiellement de 0,45 à 0,65 et encore plus préférentiellement de 0,45 à 0,55, on privilégie la formation d'espèces couplées. De la même manière, avec un rapport allant de 0,15 à 0,40, préférentiellement de 0,20 à 0,35, encore plus préférentiellement de 0,30 à 0,35, on forme majoritairement des espèces étoilées (3 branches). Avec un rapport supérieur ou égal à 0,75, préférentiellement supérieur à 1, on forme majoritairement des espèces fonctionnalisées en bout de chaîne.

Ainsi, à titre d'exemple, on prépare au moins deux élastomères diéniques modifiés de composition différente, l'élastomère étant avant modification de même nature (microstructure et macrostructure identiques) avec un même agent de fonctionnalisation dont on fait varier les proportions selon l'espèce majoritaire ciblée. Pour chaque élastomère diénique modifié, on règle à environ 8% le taux d'élastomère non-fonctionnel.

A l'issue de leur synthèse en discontinu, la composition des élastomères diéniques modifiés est déterminée par exemple par la technique de SEC haute résolution. La proportion de chaque élastomère dans le mélange peut ensuite être aisément évaluée par l'homme du métier afin d'atteindre le taux visé de chacune des espèces dans l'élastomère diénique modifié selon l'invention.

Le mélangeage de ces élastomères peut s'effectuer dans un solvant inerte par exemple un hydrocarbure aliphatique ou alicyclique comme le pentane, l'hexane, l'heptane, l'iso-octane, le cyclohexane ou un hydrocarbure aromatique comme le benzène, le toluène, le xylène, qui peut être le même que le solvant polymérisation. On effectuera alors le mélangeage à une température comprise entre 20°C et 120°C et de préférence voisine de 30°C à 90°C.

Ces élastomères de compositions différentes peuvent être synthétisés de préférence en discontinu dans un réacteur agité, supposé parfaitement agité selon l'homme de l'art, de manière connue en soi.

Les inventeurs ont également mis au point un procédé innovant permettant de préparer l'élastomère modifié selon l'invention en continu alors que jusqu'à présent la maîtrise des répartitions d'espèces n'était envisageable qu'en discontinu. Les étapes de polymérisation et de modification par l'agent de fonctionnalisation se déroulent sur une même ligne de production en continu.

L'homme du métier saura mettre en oeuvre la polymérisation anionique en continu d'au moins un monomère diène conjugué connue en soi.

Concernant l'étape de modification de l'élastomère vivant porteur d'un site actif obtenu après polymérisation par un agent de fonctionnalisation, celle-ci est caractérisée par une distribution de temps de séjour particulière et un modèle cinétique spécifique.

Ainsi, l'étape de modification de l'élastomère diénique se déroule en continu dans un dispositif de fonctionnalisation, par mise en contact de l'élastomère diénique vivant porteur d'un site actif obtenu après polymérisation avec un agent de fonctionnalisation non polymérisable comprenant (a) le cas échéant, une fonction susceptible d'interagir avec une charge renforçante et (b) un groupement trialcoxysilane, le radical alcoxy, hydrolysable ou non, ayant 1 à 10 atomes de carbone,

- la modification comprenant trois réactions en série

| Réaction | Mécanisme |
|---|---|
| R1 | $PLi + A \xrightarrow{k_1} PA$ |
| R2 | $PLi + PA \xrightarrow{k_2} P_2A$ |
| R3 | $PLi + P_2A \xrightarrow{k_3} P_3A$ |

où
- A représente l'agent de fonctionnalisation,
- PLi représente une chaîne élastomère vivante,
- PA représente l'élastomère fonctionnalisé en bout de chaîne,
- $P_2A$ représente l'élastomère couplé,
- $P_3A$ représente l'élastomère étoilé à trois branches, et
- $k_i$ représente la constante cinétique de la réaction $R_i$, s'effectuant selon la loi de vitesse suivante :

| Réactions | Vitesse de réaction |
|---|---|
| R1 | $V_1 = k_1[PLi][A]$ |
| R2 | $V_2 = k_2[PLi][PA]$ |
| R3 | $V_3 = k_3[PLi][P_2A]$ |

où
- $k_1$, $k_2$ et $k_3$ sont les constantes cinétiques respectivement des réactions R1, R2 et R3 (exprimées en $(m^3/mol).s^{-1}$),
- [PLi] est la concentration de chaînes vivantes (exprimée en $mol/m^3$),
- [A] est la concentration en agent de modification A (exprimée en $mol/m^3$),
- [PA] est la concentration en élastomère fonctionnalisé en bout de chaîne (exprimée en $mol/m^3$),
- $[P_2A]$ est la concentration en élastomère couplé (exprimée en $mol/m^3$),
- $[P_3A]$ est la concentration en élastomère étoilé à trois branches (exprimée en $mol/m^3$),le rapport K des constantes cinétiques défini comme: $K = \frac{k_1}{k_2} = \frac{k_2}{k_3}$ étant supérieur à 1, et

➢ la distribution de temps de séjour dans le dispositif de fonctionnalisation s'exprimant selon l'une des équations 1 et 3 suivantes :

(i) dans un dispositif de fonctionnalisation à au moins un réacteur continu tubulaire ou à au moins une cascade d'au moins deux réacteurs agités,

$$E_1(t) = \frac{1}{2}\left(\frac{P}{\pi\,\theta_1\,t}\right)^{\frac{1}{2}} e^{-\frac{P(\theta_1 - t)^2}{4\,\theta_1\,t}} \qquad \text{Eq 1}$$

dans laquelle :

- P est le paramètre adimensionnel de résistance à la dispersion,
- $\theta_1$ est le temps de séjour défini comme le ratio volume de réacteur/débit volumique total, égal de préférence à au moins 0,1 minute et au plus à 10 minutes, plus préférentiellement au plus à 5 minutes,
- t est la variable temps de la distribution de temps de séjour.

(ii) dans un dispositif de fonctionnalisation qui est une combinaison du dispositif (i) et d'un dispositif à au moins un réacteur continu agité, présentant une distribution de temps de séjour caractérisée par l'équation suivante :

$$E_2(t) = \frac{e^{\left(-\frac{t}{\theta_2}\right)}}{\theta_2} \qquad \text{Eq 2}$$

dans laquelle :

- $\theta_2$ est le temps de séjour défini comme le ratio volume de réacteur/débit volumique total, compris de préférence entre 0 et 60 minutes, plus préférentiellement entre 5 et 50 minutes,
- *t* est la variable temps de la distribution de temps de séjour,
  le dispositif (ii) présentant une distribution de temps de séjour caractérisée par l'équation 3 suivante, qui est le

résultat de la convolution des équations 1 et 2 :

$$E_{12}(t) = \int_0^t E_1(t-T)\,E_2(T)dT$$

Eq 3

$$E_{12}(t) = \int_0^t \frac{1}{2}\left(\frac{P}{\pi\,\theta_1\,(t-T)}\right)^{\frac{1}{2}} e^{-\frac{P(\theta_1-(t-T))^2}{4\,\theta_1\,(t-T)}} \frac{e^{\left(-\frac{T}{\theta_2}\right)}}{\theta_2}\,dT$$

dans laquelle :

- $\theta_1$ *et* $\theta_2$ sont les temps de séjours tels que définis plus haut,
- *P* est le paramètre adimensionnel de résistance à la dispersion,
- *t* est la variable temps de la distribution de temps de séjour,
- *T* est la variable d'intégration.

Dans ces équations, P est le paramètre adimensionnel de résistance à la dispersion comme défini dans la bibliographie « Villermeaux, J; Génie de la réaction chimique; 1993 ». Il est de préférence supérieur à 6,9, plus préférentiellement supérieur ou égal à 9,6, voire supérieur ou égal à 12. P n'est pas limité par une valeur maximale dans le cadre l'invention. Il peut tendre vers l'infini. S'il tend vers l'infini, le dispositif dans lequel se déroule la fonctionnalisation se comporte alors comme un réacteur idéal avec un écoulement de type piston.

Un des éléments essentiels de l'invention réside dans le choix de cet agent de fonctionnalisation pour correspondre au modèle cinétique de la fonctionnalisation défini plus haut avec un rapport des constantes cinétiques, noté K, supérieur à 1.

Ce rapport K est supérieur à 1, de préférence supérieur ou égal à 10, voire supérieur ou égal à 100. En dessous de cette valeur de 1, la répartition des différentes espèces conduit à un élastomère modifié dont l'utilisation en composition de caoutchouc renforcée se traduit par des propriétés de mise en oeuvre et d'hystérèse qui ne sont pas toujours optimisées pour une utilisation satisfaisante en bande de roulement pour pneumatique. Il n'y a pas de limite supérieure à K. L'homme du métier comprendra que plus K est grand, plus la réaction est gérée par le ratio molaire de l'agent de fonctionnalisation à initiateur de polymérisation. Lorsque cette valeur tend vers l'infini, le procédé est quantitatif et stoechiométrique.

L'agent de fonctionnalisation conforme à l'invention peut être porteur d'une fonction alcoxysilane hydrolysable en fonction silanol ou encore d'une fonction alcoxysilane non hydrolysable, et éventuellement d'une autre fonction susceptible d'interagir avec une charge renforçante, les deux fonctions étant directement liées entre elles ou par l'intermédiaire d'un groupement espaceur. L'autre fonction susceptible d'interagir avec une charge renforçante et le groupement espaceur sont tels que définis plus haut.

L'agent de fonctionnalisation peut être représenté par la formule 1 suivante:

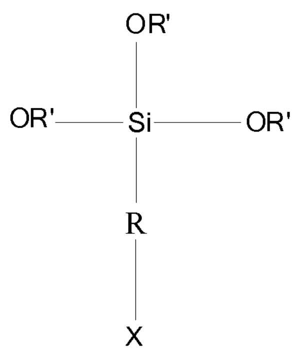

Formule 1

dans laquelle,

- R est un radical hydrocarboné divalent aliphatique, saturé ou non, cyclique ou non, en $C_1$-$C_{18}$, aromatique en $C_6$-$C_{18}$, de préférence un radical hydrocarboné divalent, linéaire ou ramifié, aliphatique en $C_1$-$C_{10}$, plus préférentiellement un radical hydrocarboné divalent linéaire aliphatique en $C_1$-$C_6$, plus préférentiellement encore le radical hydrocar-

boné linéaire en $C_3$.

- X est un atome d'hydrogène ou une fonction susceptible d'interagir avec une charge renforçante,

- les radicaux R', substitués ou non substitués, identiques ou différents, représentent un groupe alkyle en $C_1$-$C_{10}$, voire en $C_1$-$C_8$, de préférence un groupe alkyle en $C_1$-$C_4$, plus préférentiellement méthyle et éthyle.

La fonction susceptible d'interagir avec une charge renforçante est telle que définie plus haut.

Selon des variantes de l'invention, la fonction susceptible d'interagir avec une charge renforçante est une amine primaire, protégée ou non, secondaire, protégée ou non, ou tertiaire. L'atome d'azote peut alors être substitué par deux groupements, identiques ou différents, pouvant être un radical trialkyl silyl, le groupement alkyle ayant 1 à 4 atomes de carbone, ou un radical alkyle en $C_1$-$C_{10}$, de préférence alkyle en $C_1$-$C_4$, plus préférentiellement un radical méthyle ou éthyle, ou alors les deux substituants de l'azote forment avec celui-ci un hétérocycle contenant un atome d'azote et au moins un atome de carbone, de préférence de 2 à 6 atomes de carbone,

On peut citer par exemple à titre d'agent de fonctionnalisation les (N,N-dialkylaminopropyl)trialcoxysilanes, les (N-alkylaminopropyl)trialcoxysilanes dont la fonction amine secondaire est protégée par un groupement trialkyl silyl et les aminopropyltrialcoxysilanes dont la fonction amine primaire est protégée par deux groupements trialkyl silyl. Préférentiellement, l'agent de fonctionnalisation peut être choisi parmi le 3-(N,N-diméthylaminopropyl)triméthoxysilane, le 3-(N,N-diméthylaminopropyl)triéthoxysilane , le 3-(N,N-diéthylaminopropyl)triméthoxysilane, le 3-(N,N-diéthylaminopropyl)triéthoxysilane, le 3-(N,N-dipropylaminopropyl)triméthoxysilane, le 3-(N,N-dipropylaminopropyl)triéthoxysilane, le 3-(N,N-dibutylaminopropyl)triméthoxysilane, le 3-(N,N-dibutylaminopropyl)triéthoxysilane, le 3-(N,N-dipentylaminopropyl)triméthoxysilane, le 3-(N,N-dipentylaminopropyl)triéthoxysilane, le 3-(N,N-dihexylaminopropyl)triméthoxysilane, le 3-(N,N-dihexylaminopropyl)triéthoxysilane, le 3-(hexamethylèneaminopropyl)triméthoxysilane, le 3-(hexamethylèneaminopropyl)triéthoxysilane, le 3-(morpholinopropyl)triméthoxysilane, le 3-(morpholinopropyl)triéthoxysilane, le 3-(piperidinopropyl)triméthoxysilane, le 3-(piperidinopropyl)triéthoxysilane. Plus préférentiellement, l'agent de couplage est le 3-(N,N-diméthylaminopropyl)triméthoxysilane.

Préférentiellement, l'agent de fonctionnalisation peut être choisi parmi le 3-(N,N-méthyltriméthylsilylaminopropyl)triméthoxysilane, le 3-(N,N-méthyltriméthylsilylaminopropyl)triéthoxysilane, le 3-(N,N-éthyltriméthylsilylaminopropyl)triméthoxysilane, le 3-(N,N-éthyltriméthylsilylaminopropyl)triéthoxysilane, le 3-(N,N-propyltriméthylsilylaminopropyl)triméthoxysilane, le 3-(N,N-propyltriméthylsilylaminopropyl)triéthoxysilane. Plus préférentiellement, l'agent de couplage est le 3-(N,N-méthyltriméthylsilylaminopropyl)triméthoxysilane.

Préférentiellement, l'agent de fonctionnalisation peut être choisi parmi le 3-(N,N-bistriméthylsilylaminopropyl)triméthoxysilane et le 3-(N,N-bistriméthylsilylaminopropyl)triéthoxysilane.. Plus préférentiellement, l'agent de couplage est le 3-(N,N-bistriméthylsilylaminopropyl)triméthoxysilane.

Selon des variantes de l'invention, la fonction susceptible d'interagir avec une charge renforçante est une fonction isocyanate. Préférentiellement, l'agent de fonctionnalisation peut être choisi parmi le 3-(isocyanatopropyl)triméthoxysilane et le 3-(isocyanatopropyl)triéthoxysilane.

Selon des variantes de l'invention, la fonction susceptible d'interagir avec une charge renforçante est une fonction imine. Préférentiellement, l'agent de fonctionnalisation peut être choisi parmi le N-(1,3-diméthylbutylidène)-3-(triméthoxysilyl)-1-propanamine, le N-(1,3-diméthylbutylidène)-3-(triéthoxysilyl)-1-propanamine, le N-(1,3-méthyléthylidène)-3-(triméthoxysilyl)-1-propanamine, le N-(1,3-méthyléthylidène)-3-(triéthoxysilyl)-1-propanamine, le N-ethylidène-3-(triméthoxysilyl)-1-propanamine, le N-ethylidène-3-(triéthoxysilyl)-1-propanamine, le N-(1-méthylpropylidène)-3-(triméthoxysilyl)-1-propanamine, le N-(1-méthylpropylidène)-3-(triéthoxysilyl)-1-propanamine, le N-(4-N,N-diméthylaminobenzylidène)-3-(triméthoxysilyl)-1-propanamine, le N-(4-N,N-diméthylaminobenzylidène)-3-(triéthoxysilyl)-1-propanamine, le N-(cyclohexylidène)-3-(triméthoxysilyl)-1-propanamine, le N-(cyclohexylidène)-3-(triéthoxysilyl)-1-propanamine, le N-(3-triméthoxysilylpropyl)-4,5-dihydroimidazole, le N-(3-triéthoxysilylpropyl)-4,5-dihydroimidazole, le N-(3-triméthoxysilylpropyl)-4,5-imidazole, N-(3-triéthoxysilylpropyl)-4,5-imidazole.

Selon des variantes de l'invention, la fonction susceptible d'interagir avec une charge renforçante est une fonction cyano. Préférentiellement, l'agent de fonctionnalisation peut être choisi parmi le 3-(cyanopropyl)triméthoxysilane et le 3-(cyanopropyl)triéthoxysilane.

Selon des variantes de l'invention, la fonction susceptible d'interagir avec une charge renforçante est une fonction thiol, protégée ou non. On peut citer à titre d'exemple les (S-trialkylsilylmercaptopropyl)trialcoxysilanes. Préférentiellement, l'agent de fonctionnalisation peut être choisi parmi le (S-triméthylsilylmercaptopropyl)triméthoxysilane, le (S-triméthylsilylmercaptopropyl)triéthoxysilane, le (S-tert-butyldiméthylsilylmercaptopropyl)triméthoxysilane, le (S-tert-butyldiméthylsilylmercaptopropyl)triéthoxysilane.

Selon des variantes de l'invention, la fonction susceptible d'interagir avec une charge renforçante est une fonction carboxylate. A titre de fonction carboxylate, on peut citer les acrylates ou les méthacrylates. Une telle fonction est de préférence un méthacrylate. Préférentiellement, l'agent de fonctionnalisation peut être choisi parmi le 3-(méthacryloyloxypropyl)triméthoxysilane, et le 3-(méthacryloyloxypropyl)triéthoxysilane.

Selon des variantes de l'invention, la fonction susceptible d'interagir avec une charge renforçante est une fonction époxyde. Préférentiellement, l'agent de fonctionnalisation peut être choisi parmi le 2-(glycidyloxyéthyl)triméthoxysilane, le 2-(glycidyloxyéthyl)triéthoxysilane le 3-(glycidyloxypropyl)triméthoxysilane, le 3-(glycidyloxypropyl)triéthoxysilane, le 2-(3,4-époxycyclohexyl)-éthyltriméthoxysilane, le 2-(3,4-époxycyclohexyl)-éthyltriéthoxysilane.

Selon des variantes de l'invention, la fonction susceptible d'interagir avec une charge renforçante est une fonction phosphine primaire, protégée ou non, secondaire, protégée ou non, ou tertiaire. Préférentiellement, l'agent de fonctionnalisation peut être choisi parmi le 3-(P,P-bistriméthylsilylphosphinopropyl)triméthoxysilane, le 3-(P,P-bistriméthylsilylphosphinopropyl)triéthoxysilane, le 3-(méthyltriméthylsilylphosphinopropyl)triméthoxysilane, le 3-(méthyltriméthylsilylphosphinopropyl)triéthoxysilane, le 3-(éthyltriméthylsilylphosphinopropyl)triméthoxysilane, le 3-(éthyltriméthylsilylphosphinopropyl)triéthoxysilane, le 3-(diméthylphosphinopropyl)triméthoxysilane, le 3-(diméthylphosphinopropyl)triéthoxysilane, le 3-(diéthylphosphinopropyl)triméthoxysilane, le 3-(diéthylphosphinopropyl)triéthoxysilane, le 3-(éthylméthylphosphinopropyl)triméthoxysilane, le 3-(éthylméthylphosphinopropyl)triéthoxysilane, le 3-(diphénylphosphinopropyl)triméthoxysilane, le 3-(diphénylphosphinopropyl)triéthoxysilane.

Selon les variantes de l'invention selon lesquelles l'agent de fonctionnalisation est porteur d'une fonction amine primaire ou secondaire protégée, le procédé de synthèse peut se poursuivre par une étape de déprotection de l'amine primaire ou secondaire. Cette étape est mise en oeuvre après la réaction de modification. On peut à titre d'exemple faire réagir les chaînes fonctionnalisées par le groupement amine protégé avec un acide, une base, un dérivé fluoré tel le fluorure de tétrabutylammonium, un sel d'argent tel que le nitrate d'argent, etc...pour déprotéger cette fonction amine. Ces différentes méthodes sont décrites dans l'ouvrage « Protective Groups in Organic Synthesis, T. W. Green, P. G. M. Wuts, Third Edition,1999 ». Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction thiol protégée, le procédé de synthèse peut se poursuivre par une étape de déprotection du thiol. Cette étape est mise en oeuvre après la réaction de modification. On peut à titre d'exemple faire réagir les chaînes fonctionnalisées par le groupement thiol protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction phosphine primaire ou secondaire protégée, le procédé de synthèse peut se poursuivre par une étape de déprotection de la phosphine. Cette étape est mise en oeuvre après la réaction de modification. On peut à titre d'exemple faire réagir les chaînes fonctionnalisées par le groupement phosphine protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon des variantes de l'invention, le procédé de synthèse peut comprendre une étape d'hydrolyse des fonctions alcoxysilanes hydrolysables, par adjonction d'un composé acide, basique ou neutre tel que décrit dans le document EP 2 266 819 A1. Les fonctions hydrolysables sont alors transformées en fonction silanol.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures sous forme sèche. Cette étape de stripping peut avoir pour effet d'hydrolyser tout ou partie des fonctions alcoxysilanes hydrolysables de l'élastomère diénique modifié pour les transformer en fonctions silanol. Avantageusement, au moins 50 à 70% molaire des fonctions peuvent ainsi être hydrolysées.

L'invention a encore pour objet une composition de caoutchouc renforcée à base d'au moins une charge renforçante et d'une matrice élastomère comprenant au moins un élastomère diénique modifié selon l'invention.

La matrice élastomère peut comprendre jusqu'à 100 pce d'élastomère diénique modifié selon l'invention. Dans le cadre de la composition de caoutchouc renforcée, par "élastomère diénique modifié selon l'invention", on entend par là également tout mélange d'au moins deux élastomères modifiés selon l'invention.

Selon des variantes de l'invention, la matrice élastomère peut également comprendre au moins un élastomère diénique différent dudit élastomère diénique modifié selon l'invention. Ce ou ces élastomères diéniques différents de l'élastomère diénique modifié selon l'invention peuvent être choisis parmi les élastomères diéniques conventionnellement utilisés dans les pneus, tels que le caoutchouc naturel ou un élastomère synthétique, ou encore un autre élastomère fonctionnalisé, couplé ou étoilé. Ce ou ces élastomères diéniques différents dudit élastomère diénique modifié selon l'invention peuvent alors être présents de 1 à 70 parties en poids pour 100 parties d'élastomère diénique modifié selon l'invention.

Selon d'autres variantes, la matrice est uniquement constituée de cet élastomère diénique modifié selon la présente invention.

A titre de charge renforçante, on peut utiliser tout type connu pour ses capacités à renforcer une composition de caoutchouc utilisable pour la fabrication de pneumatiques, par exemple du noir de carbone, une charge inorganique renforçante telle que de la silice à laquelle est associé de manière connue un agent de couplage, ou encore un mélange de ces deux types de charge.

Selon une variante particulièrement intéressante de l'invention, la charge renforçante est majoritairement autre que du noir de carbone, plus préférentiellement elle comprend plus de 50% en poids du poids total de la charge, d'une ou de plusieurs charges autres que du noir de carbone, notamment une charge inorganique renforçante telle que la silice, voire elle est exclusivement constituée d'une telle charge.

Selon cette autre variante, lorsque du noir de carbone est également présent, il peut être utilisé à un taux inférieur à 20 pce, plus préférentiellement inférieur à 10 pce (par exemple entre 0,5 et 20 pce, notamment de 1 à 10 pce).

De manière préférentielle, le taux de charge renforçante total (noir de carbone et/ou autre charge renforçante telle que la silice) est compris entre 10 et 200 pce, plus préférentiellement entre 30 et 150 pce, l'optimum étant de manière connue différent selon les applications particulières visées.

Comme noirs de carbone conviennent tous les noirs de carbone, utilisés individuellement ou sous forme de mélanges, notamment les noirs conventionnellement mis en oeuvre dans les pneumatiques ou leurs bandes de roulement (noirs dits de grade pneumatique). Ces noirs de carbone peuvent être utilisés à l'état isolé, tels que disponibles commercialement, ou sous toute autre forme, par exemple comme support de certains des additifs de caoutchouterie utilisés.

Comme charge inorganique renforçante, doit être entendu ici toute autre charge inorganique ou minérale, quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyles (OH) à sa surface.

Comme charges inorganiques renforçantes conviennent notamment des charges minérales du type siliceux, préférentiellement la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. On citera également les charges minérales du type alumineux, en particulier de l'alumine ($Al_2O_3$) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes seraient recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge renforçante est indifférent, que ce soit sous forme de poudre, de microperles, de granulés, ou encore de billes. Bien entendu on entend également par charge inorganique renforçante des mélanges de différentes charges renforçantes, en particulier de silices hautement dispersibles telles que décrites ci-dessus.

Lorsque la silice est présente dans la composition à titre de charge renforçante, on peut utiliser comme agents de couplage des organosilanes, notamment des alcoxysilanes polysulfurés ou des mercaptosilanes, ou encore des polyorganosiloxanes au moins bifonctionnels. Des agents de liaison silice/élastomère, notamment, ont été décrits dans un grand nombre de documents, les plus connus étant des alcoxysilanes bifonctionnels tels que des alcoxysilanes polysulfurés.

Dans les compositions conformes à l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante.

Les compositions de caoutchouc conformes à l'invention peuvent également contenir, en complément des agents de couplage, des activateurs de couplage, des agents de recouvrement des charges ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalcoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir des charges organiques renforçantes qui peuvent remplacer tout ou partie des noirs de carbone ou des autres charges renforçantes décrites plus haut. Comme exemples de charges organiques renforçantes, on peut citer les charges organiques de polyvinyle fonctionnalisées telles que décrites dans les demandes WO-A-2006/069792, WO-A-2006/069793, WO-A-2008/003434

et WO-A-2008/003435.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxydes et/ou de bismaléimides, des accélérateurs de vulcanisation, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters, les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés.

L'invention a également pour objet un procédé de préparation d'une composition de caoutchouc telle que décrite précédemment.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition de caoutchouc selon l'invention comporte au moins les étapes suivantes :

- la réalisation, à une température maximale comprise entre 110 °C et 190 °C, de préférence entre 130°C et 180°C, d'un premier temps de travail thermomécanique (parfois qualifié de phase " non productive") des constituants de base nécessaires de la composition de caoutchouc, à l'exception du système de réticulation et le cas échéant un promoteur d'adhésion, par incorporation de manière intime, par malaxage en une ou plusieurs étapes, à la matrice élastomère comprenant l'élastomère diénique modifié selon l'invention, d'ingrédients de la composition, puis

- la réalisation, à une température inférieure à ladite température maximale dudit premier temps, de préférence inférieure à 110 °C, d'un second temps de travail mécanique au cours duquel est incorporé ledit système de réticulation et le cas échéant un promoteur d'adhésion.

Selon des variantes de l'invention, le procédé de préparation de la composition de caoutchouc comprend les étapes de préparation de l'élastomère diénique modifié selon l'invention telles que décrites plus haut selon ses différentes méthodes de synthèse.

La composition finale ainsi obtenue peut ensuite être calandrée, par exemple sous la forme d'une feuille, d'une plaque ou encore extrudée, par exemple pour former un profilé de caoutchouc utilisable comme produit semi-fini en caoutchouc destiné au pneumatique.

L'invention a également pour objet un produit semi-fini en caoutchouc comprenant une composition de caoutchouc renforcée selon l'invention.

L'invention a également pour objet un pneumatique dont au moins un de ses éléments constitutifs est un produit semi-fini en caoutchouc comprenant une composition de caoutchouc renforcée selon l'invention.

En raison de l'amélioration du compromis hystérèse / mise en oeuvre qui caractérise une composition de caoutchouc renforcée selon l'invention, on notera qu'une telle composition peut constituer tout produit semi-fini du pneumatique et tout particulièrement la bande de roulement, diminuant ainsi sa résistance au roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

## I- MESURES ET TESTS UTILISES

### (a) Détermination de la distribution de masses molaires des élastomères par la technique de chromatographie d'exclusion stérique (SEC conventionnelle)

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC conventionnelle permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé *via* un étalonnage dit de MOORE.

Il n'y a pas de traitement particulier de l'échantillon de polymère avant analyse. Celui-ci est simplement solubilisé dans le solvant d'élution à une concentration d'environ 1 g.$L^{-1}$. Puis la solution est filtrée sur filtre de porosité 0,45$\mu$m avant injection.

L'appareillage utilisé est une chaîne chromatographique "WATERS alliance". Le solvant d'élution est soit le tétrahydrofurane, soit le tétrahydrofurane + 1 vol.% de diisopropylamine + 1 vol.% de triéthylamine, le débit de 1 ml.$min^{-1}$, la température du système de 35 °C et la durée d'analyse de 30 min. Un jeu de deux colonnes WATERS, de dénomination commerciale "STYRAGEL HT6E", est utilisé. Le volume injecté de la solution de l'échantillon de polymère est 100 $\mu$L. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

### (b) Détermination de la répartition des chaînes fonctionnalisées en extrémité de chaîne, en milieu de chaîne et étoilées 3 branches par la technique de chromatographie d'exclusion stérique haute résolution (SEC haute résolution).

La technique de SEC haute résolution est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 g.$L^{-1}$. Puis la solution est filtrée sur filtre de porosité 0,45$\mu$m avant injection.

L'appareillage utilisé est une chaîne chromatographique "WATERS alliance 2695". Le solvant d'élution est le tétrahydrofurane, le débit de 0,2 ml.$min^{-1}$, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 $\mu$L. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

### (c) Caractérisation de la microstructure des élastomères par la technique de spectroscopie proche infrarouge (NIR)

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 $\mu$m d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

### (d) Détermination des viscosités Mooney $ML_{(i+4)}$100 °C pour les élastomères et les compositions de caoutchouc selon la norme ASTM D-1646

Un consistomètre oscillant est utilisé tel que décrit dans la norme ASTM D-1646. La mesure de plasticité Mooney se fait selon le principe suivant : l'élastomère (ou la composition à l'état cru (i.e. avant cuisson)) est moulé(e) dans une enceinte cylindrique chauffée à 100 °C. Après une minute de préchauffage, le rotor tourne au sein de l'éprouvette à 2 tr.$min^{-1}$ et le couple utile pour entretenir ce mouvement après 4 minutes de rotation est mesuré. La plasticité Mooney ($ML_{(1+4)}$) est exprimée en "unité Mooney" (UM, avec 1 UM = 0,83 N.m).

**(e) Détermination des températures de transition vitreuse (Tg) des élastomères au moyen d'un calorimètre différentiel ("differential scanning calorimeter").**

**(f) Détermination de la viscosité inhérente des élastomères à 25 °C à partir d'une solution d'élastomère à 0,1 g.dL$^{-1}$ dans le toluène, selon le principe suivant :**

La viscosité inhérente est déterminée par la mesure du temps d'écoulement t de la solution de polymère et du temps d'écoulement $t_0$ du toluène, dans un tube capillaire.
Dans un tube Ubbelhode (diamètre du capillaire 0,46 mm, capacité 18 à 22 mL), placé dans un bain thermostaté à 25 ± 0,1 °C, le temps d'écoulement du toluène et celui de la solution polymère à 0,1 g.dL$^{-1}$ sont mesurés.
La viscosité inhérente est obtenue par la relation suivante :

$$\eta_{inh} = \frac{1}{C}\ln\left[\frac{(t)}{(t_0)}\right]$$

avec :

- **C** : concentration de la solution de polymère dans le toluène en g.dL$^{-1}$,
- ***t*** : temps d'écoulement de la solution de polymère dans le toluène en seconde,
- $t_0$ : temps d'écoulement du toluène en seconde,
- $\eta_{inh}$ : viscosité inhérente exprimée en dL.g$^{-1}$.

La mesure de la viscosité inhérente "initiale", qui est la viscosité du polymère avant fonctionnalisation, et de la viscosité inhérente "finale", qui est la viscosité du polymère après fonctionnalisation, nous permet de calculer le saut de viscosité qui est le rapport de ladite viscosité inhérente "finale" sur ladite viscosité inhérente "initiale".

**(g) Détermination du cold flow des élastomères ($CF_{(1+6)}$100°C) selon la méthode de mesure suivante :**

Il s'agit de mesurer la masse de gomme extrudée à travers une filière calibrée pendant un temps donné (6 heures) et dans des conditions fixées (T = 100 °C). La filière a un diamètre de 6,35 mm, une épaisseur de 0,5 mm et est située au fond et au centre d'une coupe cylindrique évidée de 52 mm de diamètre.
Dans ce dispositif sont placés 40 ± 4 g de gomme préalablement mise sous forme de pastille (2 cm d'épaisseur et 52 mm de diamètre). Sur la pastille de gomme est positionné un piston calibré de 1 kg (± 5 g). L'ensemble est ensuite placé dans une étuve à 100 ± 0,5 °C.
Les conditions n'étant pas stabilisées lors de la première heure dans l'étuve, le produit extrudé à t = 1 heure est découpé puis jeté.
La mesure est ensuite poursuivie pendant 6 heures ± 5 mn, durant lesquelles le produit est laissé dans l'étuve. A l'issue des 6 heures, l'échantillon de produit extrudé est découpé puis pesé. Le résultat de la mesure est la masse de gomme pesée. Plus ce résultat est faible, plus l'élastomère résiste au fluage à froid.

**(h) Détermination des propriétés dynamiques tan δ max**

Les propriétés dynamiques notamment tan δ max sont mesurées sur un viscoanalyseur (Metravib VA4000), selon la norme ASTM D 5992-96. La réponse d'un échantillon de composition vulcanisée (éprouvette cylindrique de 2 mm d'épaisseur et de 79 mm$^2$ de section), soumis à une sollicitation sinusoïdale en cisaillement simple alterné, à la fréquence de 10 Hz, est enregistrée dans les conditions normales de température (23 °C) selon la norme ASTM D 1349-99. Un balayage en amplitude de déformation crête-crête de 0,1 % à 50 % (cycle aller), puis de 50 % à 0,1 % (cycle retour), est réalisé. Le résultat exploité est le facteur de perte tan δ. Pour le cycle retour, la valeur maximale de tan δ observée (tan δ max) est indiquée. Cette valeur est représentative de l'hystérèse du matériau et dans le cas présent de la résistance au roulement : plus la valeur de tan δ max est faible, plus la résistance au roulement est basse.

**(i) Détermination de la répartition des espèces d'un élastomère modifié.**

**1- Exemple de détermination du rapport de constantes cinétiques (K) du modèle cinétique de fonctionnalisation en réacteur agité discontinu**

**Détermination expérimentale du pourcentage massique des chaînes fonctionnalisées en extrémité de chaîne, en milieu de chaîne et étoilées (3 branches) et du saut de viscosité en fonction du rapport molaire 3-(N,N-diméthylaminopropyl)triméthoxysilane/n-BuLi**

Dans onze bouteilles en verre (bouteilles steinie) de 250 mL sont introduits 91,6 mL (70,5 g) de méthylcyclohexane, 14,8 mL (9,65 g) de butadiène et 0,49 mL d'une solution de tetrahydrofurfuryl éther dans le méthylcyclohexane à 0,078 $mol.L^{-1}$. Après neutralisation des impuretés dans la solution à polymériser par addition de n-Butyllithium (n-BuLi), 1,90 mL de n-BuLi à 0,097 $mol.L^{-1}$ dans le méthylcyclohexane sont ajoutés. La polymérisation est conduite à 60 °C. Après 15 minutes, le taux de conversion en monomère atteint 95 %. Ce taux est déterminé par pesée d'un extrait séché à 140 °C, sous la pression réduite de 200 mmHg. Une bouteille témoin (bouteille n°1) est stoppée avec un excès de méthanol par rapport au lithium. La viscosité inhérente "initiale" est de 0,66 $dL.g^{-1}$. 0,88 mL d'une solution de 3-(N,N-diméthylaminopropyl)triméthoxysilane à 0,1 $mol.L^{-1}$ dans le méthylcyclohexane sont ajoutés aux solutions de polymère vivant (0,48 éq. molaire *vs* Li) contenues dans les bouteilles 2 à 9, 0,73 mL de cette même solution sont ajoutés dans la bouteille 10 (0,40 éq. molaire *vs* Li) et 1,83 mL de cette même solution sont ajoutés dans la bouteille 11 (1,0 éq. molaire *vs* Li). Après 15 minutes de réaction à 60 °C, les solutions sont antioxydées par addition de 0,4 partie pour cent parties d'élastomère (pce) de 4,4'-méthylène-bis-2,6-tert-butylphénol et de 0,2 partie pour cent parties d'élastomère (pce) de *N*-(1,3-diméthylbutyl)-N'-phényl-p-phénylènediamine. Les polymères ainsi traités sont séparés de leur solution par séchage à 60 °C sous pression réduite et courant d'azote pendant 12 heures.
Les viscosités inhérentes "finales", les sauts de viscosité définis comme les rapports des viscosités inhérentes "finales" sur la viscosité inhérente "initiale" ainsi que les pourcentages massiques des chaînes désactivées (P), des chaînes fonctionnalisées en extrémité de chaîne (PA), en milieu de chaîne ($P_2A$) et étoilées ($P_3A$) sont présentées dans le Tableau 1 ci-dessous.

**Tableau 1** - Evolution de la répartition des espèces P+PA/$P_2A$/$P_3A$ et du saut de viscosité en fonction du rapport molaire 3-(N,N-diméthylaminopropyl)triméthoxysilane/n-BuLi.

| Bouteille | Rapport molaire 3-(N,N-diméthylaminopropyl)triméthoxysilane / Li | Saut de viscosité | P+PA/$P_2A$/$P_3A$ (wt.%) |
|---|---|---|---|
| 2 | 0,48 | | 12/77/10 |
| 3 | 0,48 | | 13/77/9 |
| 4 | 0,48 | | 13/78/9 |
| 5 | 0,48 | | 13/82/5 |
| 6 | 0,48 | | 13/83/5 |
| 7 | 0,48 | | 13/83/4 |
| 8 | 0,48 | | 14/83/4 |
| 9 | 0,48 | 1,54 | 11/84/4 |
| 10 | 0,40 | 1,61 | 15/53/25 |
| 11 | 1,00 | 1,09 | 72/20/7 |

L'élastomère diénique vivant est fonctionnalisé selon le mécanisme réactionnel décrit plus haut dans la description.

Le modèle cinétique de fonctionnalisation intégré, selon l'homme d'art, à un modèle de réacteur parfaitement agité discontinu (bibliographie : Villermeaux, J; Génie de la réaction chimique; 1993) permet de déterminer la répartition des différentes espèces. De plus, les chaînes peuvent être désactivées (P) lors de l'étape de polymérisation ou/et fonctionnalisation. Ainsi, le produit final est un mélange d'élastomère désactivé (P), élastomère fonctionnalisé bout de chaîne (PA), élastomère fonctionnalisé milieu de chaîne ($P_2A$) et élastomère étoilé ($P_3A$).

Pour les points expérimentaux du Tableau 1 ci-dessus, nous avons estimé la valeur de $K=10^{2\pm1}$ selon la description du modèle de réacteur parfaitement agité discontinu, qui représente le réacteur utilisé pour ces expériences.

La Figure 1 représente la répartition des espèces P, PA, $P_2A$ et $P_3A$ en fonction du rapport molaire agent de fonctionnalisation/chaînes polymère vivantes (PLi) : simulé (lignes) et mesuré (points).

**2- Exemple de détermination de la cinétique de fonctionnalisation en réacteur agité discontinu**

**Détermination expérimentale du pourcentage massique des chaînes fonctionnalisées en extrémité de chaîne, en milieu de chaîne et étoilées (3 branches) en fonction du temps de couplage avec le 3-(N,N-diméthylaminopropyl)triméthoxysilane (~ 0,5 éq. mol vs Li)**

Dans vingt-deux bouteilles en verre (bouteilles steinie) de 250 mL sont introduits 91,6 mL (70,5 g) de méthylcyclohexane, 14,8 mL (9,65 g) de butadiène et 0,49 mL d'une solution de tetrahydrofurfuryl éther dans le méthylcyclohexane à 0,078 $mol.L^{-1}$. Après neutralisation des impuretés dans la solution à polymériser par addition de n-Butyllithium (n-BuLi), 1,90 mL de n-BuLi à 0,097 $mol.L^{-1}$ dans le méthylcyclohexane sont ajoutés. La polymérisation est conduite à 60 °C.

Après 15 minutes, le taux de conversion en monomère atteint 95 %. Ce taux est déterminé par pesée d'un extrait séché à 140 °C, sous la pression réduite de 200 mmHg. 0,88 mL d'une solution de 3-(N,N-diméthylaminopropyl)triméthoxysilane à 0,1 $mol.L^{-1}$ dans le méthylcyclohexane sont ajoutés aux solutions de polymère vivant (0,48 éq. molaire *vs* Li) contenues dans les vingt et une bouteilles restantes.

Après 10 secondes (bouteilles 12, 13 et 14), 15 secondes (bouteilles 15, 16 et 17), 20 secondes (bouteilles 18, 19 et 20), 30 secondes (bouteilles 21 et 22), 2 minutes (bouteille 23) et 15 minutes (bouteilles 24, 25, 26, 27, 28, 29, 30, 31 et 32) de réaction à 60 °C, les solutions sont antioxydées par addition de 0,4 partie pour cent parties d'élastomère (pce) de 4,4'-méthylène-bis-2,6-tert-butylphénol et de 0,2 partie pour cent parties d'élastomère (pce) de *N*-(1,3-diméthylbutyl)-N'-phényl-p-phénylènediamine. Les polymères ainsi traités sont séparés de leur solution par séchage à 60 °C sous pression réduite et courant d'azote pendant 12 heures.

Les pourcentages massiques des chaînes désactivées (P), des chaînes fonctionnalisées en extrémité de chaîne (PA), en milieu de chaîne ($P_2A$) et étoilées ($P_3A$) sont présentées dans le Tableau 2 ci-dessous.

**Tableau 2 -** Evolution de la répartition des espèces P+PA/$P_2A$/$P_3A$ en fonction du temps de réaction avec le 3-(N, N-diméthylaminopropyl)triméthoxysilane.

| Bouteille | Temps de réaction avec le 3-(N,N-diméthylaminopropyl)-triméthoxysilane | P+PA (wt.%) | $P_2A$ (wt.%) | $P_3A$ (wt.%) |
|---|---|---|---|---|
| 12 | 10 s | 23 | 76 | 1 |
| 13 | 10 s | 23 | 76 | 1 |
| 14 | 10 s | 22 | 77 | 1 |
| 15 | 15 s | 19 | 79 | 1 |
| 16 | 15 s | 20 | 79 | 1 |
| 17 | 15 s | 19 | 79 | 1 |
| 18 | 20 s | 18 | 81 | 1 |
| 19 | 20 s | 17 | 81 | 1 |
| 20 | 20 s | 18 | 81 | 1 |
| 21 | 30 s | 16 | 82 | 2 |
| 22 | 30 s | 14 | 83 | 2 |
| 23 | 2 min | 11 | 86 | 2 |
| 24 | 15 min | 12 | 77 | 10 |
| 25 | 15 min | 13 | 77 | 9 |
| 26 | 15 min | 13 | 78 | 9 |
| 27 | 15 min | 13 | 82 | 5 |
| 28 | 15 min | 13 | 83 | 4 |
| 29 | 15 min | 13 | 83 | 4 |

(suite)

| Bouteille | Temps de réaction avec le 3-(N,N-diméthylaminopropyl)-triméthoxysilane | P+PA (wt.%) | $P_2A$ (wt.%) | $P_3A$ (wt.%) |
|---|---|---|---|---|
| 30 | 15 min | 14 | 83 | 4 |
| 31 | 15 min | 11 | 84 | 4 |
| 32 | 15 min | 9 | 88 | 3 |

En utilisant le même modèle cinétique de l'exemple précèdent et la valeur de $K=10^{2\pm1}$, la valeur de $k_1$[PLi], dans le modèle cinétique, est estimée à $10^{4\pm02}$. La Figure 2 compare les rendements simulés aux rendements mesurés en fonction du temps de réaction en réacteur discontinu parfaitement agité.

**3- Exemple de détermination du rapport de constantes cinétiques (K) de fonctionnalisation en configuration continue**

Dans une installation pilote de polymérisation continue, à la sortie du réacteur agité de polymérisation continu, supposé parfaitement agité, une quantité variable d'agent de fonctionnalisation est injectée afin de caractériser la section de fonctionnalisation continue. La section de fonctionnalisation est composée d'un mélangeur statique type kenics à 36 éléments de 4 L et d'un réacteur continu agité de volume 32,5 L, supposé parfaitement agité. Le temps de séjour minimal dans les réacteurs agités est de 20 minutes.

Dans un réacteur agité continu de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,85 $kg.h^{-1}$, débit massique styrène = 1,25 $kg.h^{-1}$, concentration massique en monomère = 11 wt.%, 60 ppm tétrahydrofurfuryl éthyle éther. Du n-butyllithium (n-BuLi) est introduit en quantité suffisante afin de neutraliser les impuretés protiques apportées par les différents constituants présents dans l'entrée de ligne. À l'entrée du réacteur, 850 $\mu$mol de n-BuLi pour 100 g de monomères sont introduits.

Les différents débits sont calculés afin que le temps de séjour moyen dans le réacteur soit de 40 min. La température est maintenue à 90 °C.

Le taux de conversion, mesuré sur un prélèvement réalisé en sortie de réacteur, est de 92,6 %.

En sortie de réacteur de polymérisation, du 3-(N,N-diméthylaminopropyl)triméthoxysilane en solution dans le méthylcyclohexane est ajouté à la solution de polymère vivant en différentes quantités (différents rapports molaires 3-(N,N-diméthylaminopropyl)triméthoxysilane / PLi) pour caractériser le procédé de fonctionnalisation. Cette solution est mélangée dans un mélangeur statique constitué de 36 éléments de mélangeage de type Kenics KMR puis traverse un tube vide, le temps de séjour total en tube étant de 3 minutes (mélangeur statique + tube vide), et un réacteur agité continu de 32,5 L, supposé parfaitement agité selon l'homme de l'art, de 40 minutes de temps de séjour. Les polymères sont ensuite soumis à un traitement anti-oxydant avec ajout de 0,4 pce de 2,2'-méthylène-bis(4-méthyl-6-tertiobutylphénol) et 0,2 pce de N-(1,3-diméthylbutyl)-N'-phényl-p-phénylènediamine.

Les polymères ainsi traités sont séparés de leur solution par une opération de stripping à la vapeur d'eau, puis séchés sur un outil à cylindres à 100 °C.

Les sauts de viscosité inhérente (SV) mesurés sont présentés sur la Figure 3.

Le modèle cinétique de fonctionnalisation décrit ci-dessus est intégré, selon l'homme d'art, à un modèle de réacteur tubulaire (représentatif du mélangeur statique Kenics) suivi d'un réacteur parfaitement agité continu (représentatif du réacteur agité de fonctionnalisation) (bibliographie : Villermeaux, J; Génie de la réaction chimique; 1993) et permet de déterminer la répartition d'espèces PLi, P, PA, $P_2A$ et $P_3A$.

Pour faire le lien entre la répartition des espèces PLi, P, PA, $P_2A$ et $P_3A$ calculée par le modèle cinétique de fonctionnalisation et le rapport expérimental de viscosités inhérentes avant et après fonctionnalisation (SV), le SV est calculé de manière théorique par l'équation ci-dessous :

$$SV = \left( \frac{\sum_{i=1}^{n} w_{P_iA} \bar{M}_{w,P_iA}^{a} \, g_i'}{\bar{M}_{w,P}^{a}} \right)$$

Où,

$wP_iA$ est la fraction massique des espèces $P_iA$, PLi, P ;
Mw est la masse moléculaire moyenne en poids ;

a est le paramètre de l'équation MHS (Mark Houwink Sakurada) et égal à 0,75
$g_i$' est une correction pour les polymères étoilés, par exemple :

$$g_i' = \left(\frac{3i-2}{i^2}\right)^b$$

Où,
b est égal à 0,58 (Livre : Structure and Rheology of Molten Polymers)

En supposant que le temps de séjour est assez long pour être considéré comme infini, on estime le rapport de constantes cinétiques K par minimisation des écarts de SV expérimental et calculé. La valeur de K est de $10^{1\pm1}$ comme représenté sur la Figure 3.

Le SV calculé est déterminé à partir de la répartition d'espèces calculée par le modèle cinétique intégré aux modèles de réacteurs tubulaire et parfaitement agité continu (Figure 4).

## II- ESSAIS

### II-1. Préparation des élastomères

**Préparation du polymère 1: Polymère fonctionnalisé par le 3-(N,N-diméthylaminopropyl)triméthoxysilane en milieu de chaîne selon l'invention**

Dans un réacteur agité continu de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,85 $kg.h^{-1}$, débit massique styrène = 1,25 $kg.h^{-1}$, concentration massique en monomère = 11 wt.%, 60 ppm tétrahydrofurfuryl éthyle éther. Du n-butyllithium (n-BuLi) est introduit en entrée de ligne en quantité suffisante afin de neutraliser les impuretés protiques apportées par les différents constituants présents dans l'entrée de ligne. À l'entrée du réacteur, 850 μmol de n-BuLi pour 100 g de monomères sont introduits.
Les différents débits sont calculés afin que le temps de séjour moyen dans le réacteur soit de 40 min. La température est maintenue à 90 °C.
Le taux de conversion, mesuré sur un prélèvement réalisé en sortie de réacteur, est de 92,6 % et la viscosité inhérente est de 1,68 $dL.g^{-1}$.
En sortie de réacteur, 386 micromoles pour 100 g de monomères de 3-(N,N-diméthylaminopropyl)triméthoxysilane en solution dans le méthylcyclohexane sont ajoutées à la solution de polymère vivant. Cette solution est mélangée dans un mélangeur statique constitué de 36 éléments de mélangeage de type Kenics KMR puis traverse un tube vide, le temps de séjour total en tube étant de 3 minutes (mélangeur statique + tube vide), et dans un réacteur agité continu de 32,5 L, supposé parfaitement agité selon l'homme de l'art, de 40 minutes de temps de séjour. Le polymère est ensuite soumis à un traitement anti-oxydant avec ajout de 0,4 pce de 2,2'-méthylène-bis(4-méthyl-6-tertiobutylphénol) et 0,2 pce de N-(1,3-diméthylbutyl)-N'-phényl-p-phénylènediamine.
Le polymère ainsi traité est séparé de sa solution par une opération de stripping à la vapeur d'eau, puis séché sur un outil à cylindres à 100 °C, pour obtenir le polymère **1** fonctionnalisé par le 3-(N,N-diméthylaminopropyl)triméthoxysilane en milieu de chaîne selon l'invention.
La viscosité inhérente de ce polymère **1** est de 2,15 $dL.g^{-1}$, le saut de viscosité est de 1,28 et la viscosité $ML_{(1+4)}$100°C est de 72,0. La masse molaire moyenne en nombre Mn du polymère, déterminée par la technique SEC conventionnelle, est de 145 000 $g.mol^{-1}$ et l'indice de polymolécularité Ip est de 1,72. Le cold flow $CF_{(1+6)}$100°C de cet élastomère est de 0,452.
La microstructure de ce polymère est déterminée par la méthode NIR : le taux massique de motifs 1,2 est de 24,1 %, ce taux se rapportant aux unités butadiène. Le taux massique de styrène est de 26,5 %.

**Préparation du polymère 2 : Polymère fonctionnalisé par le 3-(N,N-diméthylaminopropyl)triméthoxysilane en milieu de chaîne selon l'invention**

Dans un réacteur agité continu de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,85 $kg.h^{-1}$, débit massique styrène = 1,25 $kg.h^{-1}$, concentration massique en monomère = 11 wt.%, 60 ppm tétrahydrofurfuryl éthyle éther. Du n-butyllithium (n-BuLi) est introduit en entrée de ligne

en quantité suffisante afin de neutraliser les impuretés protiques apportées par les différents constituants présents dans l'entrée de ligne. À l'entrée du réacteur, 845 μmol de n-BuLi pour 100 g de monomères sont introduits.
Les différents débits sont calculés afin que le temps de séjour moyen dans le réacteur soit de 40 min. La température est maintenue à 90 °C.
Le taux de conversion, mesuré sur un prélèvement réalisé en sortie de réacteur, est de 92,7 % et la viscosité inhérente est de 1,66 $dL.g^{-1}$.
En sortie de réacteur, 396 micromoles pour 100 g de monomères de 3-(N,N-diméthylaminopropyl)triméthoxysilane en solution dans le méthylcyclohexane sont ajoutées à la solution de polymère vivant. Cette solution est mélangée dans un mélangeur statique constitué de 36 éléments de mélangeage de type Kenics KMR puis traverse un tube vide, le temps de séjour total en tube étant de 3 minutes (mélangeur statique + tube vide). Le polymère est ensuite soumis à un traitement anti-oxydant avec ajout de 0,4 pce de 2,2'-méthylène-bis(4-méthyl-6-tertiobutylphénol) et 0,2 pce de N-(1,3-diméthylbutyl)-N'-phényl-p-phénylènediamine.
Le polymère ainsi traité est séparé de sa solution par une opération de stripping à la vapeur d'eau, puis séché sur un outil à cylindres à 100 °C, pour obtenir le polymère **2** fonctionnalisé par le 3-(N,N-diméthylaminopropyl)triméthoxysilane en milieu de chaîne selon l'invention.
La viscosité inhérente de ce polymère **2** est de 2,12 $dL.g^{-1}$, le saut de viscosité est de 1,28 et la viscosité $ML_{(1+4)}$100°C est de 70,4. La masse molaire moyenne en nombre Mn du polymère, déterminée par la technique SEC conventionnelle, est de 142 000 $g.mol^{-1}$, la masse molaire et l'indice de polymolécularité Ip est de 1,73. Le cold flow $CF_{(1+6)}$100°C de cet élastomère est de 0,614.
La microstructure de ce polymère est déterminée par la méthode NIR : le taux massique de motifs 1,2 est de 23,6 %, ce taux se rapportant aux unités butadiène. Le taux massique de styrène est de 26,6 %.

**Préparation du polymère 3 : Polymère fonctionnalisé** par **le 3-(N,N-diméthylaminopropyl)triméthoxysilane en milieu de chaîne**

Dans un réacteur agité continu de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,85 $kg.h^{-1}$, débit massique styrène = 1,25 $kg.h^{-1}$, concentration massique en monomère = 11 wt.%, 60 ppm tétrahydrofurfuryl éthyle éther. Du n-butyllithium (n-BuLi) est introduit en entrée de ligne en quantité suffisante afin de neutraliser les impuretés protiques apportées par les différents constituants présents dans l'entrée de ligne. À l'entrée du réacteur, 840 μmol de n-BuLi pour 100 g de monomères sont introduits.
Les différents débits sont calculés afin que le temps de séjour moyen dans le réacteur soit de 40 min. La température est maintenue à 90 °C.
Le taux de conversion, mesuré sur un prélèvement réalisé en sortie de réacteur, est de 93,5 % et la viscosité inhérente est de 1,66 $dL.g^{-1}$.
Cette solution de polymère vivant est introduite en continu dans un second réacteur agité continu de 32,5 L, supposé parfaitement agité selon l'homme de l'art, de 40 minutes de temps de séjour dans lequel 393 micromoles pour 100 g de monomères de 3-(N,N-diméthylaminopropyl)triméthoxysilane en solution dans le méthylcyclohexane sont introduites en continu. Le polymère est ensuite soumis à un traitement anti-oxydant avec ajout de 0,4 pce de 2,2'-méthylène-bis(4-méthyl-6-tertiobutylphénol) et 0,2 pce de N-(1,3-diméthylbutyl)-N'-phényl-p-phénylènediamine.
Le polymère ainsi traité est séparé de sa solution par une opération de stripping à la vapeur d'eau, puis séché sur un outil à cylindres à 100 °C, pour obtenir le polymère **3** fonctionnalisé par le 3-(N,N-diméthylaminopropyl)triméthoxysilane en milieu de chaîne.
La viscosité inhérente de ce polymère **3** est de 2,14 $dL.g^{-1}$, le saut de viscosité est de 1,29 et la viscosité $ML_{(1+4)}$100°C est de 76,4. La masse molaire moyenne en nombre Mn du polymère, déterminée par la technique SEC conventionnelle, est de 144 000 $g.mol^{-1}$ et l'indice de polymolécularité Ip est de 1,80. Le cold flow $CF_{(1+6)}$100°C de cet élastomère est de 0,216.
La microstructure de ce polymère est déterminée par la méthode NIR : le taux massique de motifs 1,2 est de 24,4 %, ce taux se rapportant aux unités butadiène. Le taux massique de styrène est de 27,0 %.
Les caractéristiques des différents élastomères sont reportées dans le Tableau 3:

**Tableau 3:**

| | Exemples | | Exemple comparatif |
|---|---|---|---|
| | **1** | **2** | **3** |
| $ML_{(1+4)}$ 100°C | 72,0 | 70,4 | 76,4 |
| $CF_{(1+6)}$ 100°C | 0,452 | 0,614 | 0,216 |

(suite)

| | Exemples | | Exemple comparatif |
|---|---|---|---|
| | **1** | **2** | **3** |
| Saut de viscosité (dL.$g^{-1}$) | 1,28 | 1,28 | 1,29 |
| Chaînes non fonctionnelles (%) * | 8,0 | 8,0 | 8,0 |
| Chaînes vivantes non fonctionnalisées (%) * | 0,0 | 5,4 | 0,0 |
| Chaînes fonctionnalisées en extrémité de chaîne (%)* | 5,4 | 9,0 | 8,9 |
| Chaînes fonctionnalisées en milieu de chaîne (%)* | 70,5 | 66,8 | 51,3 |
| Chaînes étoilées (%)* | 16,1 | 10,8 | 31,8 |

* Estimation théorique des répartitions de chaîne (en faisant l'hypothèse du mécanisme réactionnel (plus haut), du modèle cinétique (plus haut) et K=10).

**II-2. Préparation des compositions**

On procède pour les essais qui suivent de la manière suivante: on introduit dans un mélangeur interne Polylab de 85$cm^3$, rempli à 70% et dont la température initiale de cuve est d'environ 110°C, les élastomères diéniques modifiés synthétisés précédemment. Ensuite, les charges renforçantes, l'agent de couplage puis, après une à deux minutes de malaxage, les divers autres ingrédients à l'exception du système de vulcanisation, sont introduits dans le mélangeur. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 min.
Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.
Les compositions de caoutchouc sont données dans le Tableau 4. Les quantités sont exprimées en parties pour 100 parties en poids d'élastomère (pce).

**Tableau 4:**

| | Exemples | | Exemple comparatif |
|---|---|---|---|
| Composition | **1** | **2** | **3** |
| Polymère **1** | 100 | | |
| Polymère **2** | | 100 | |
| Polymère **3** | | | 100 |
| Silice (1) | 80 | 80 | 80 |
| N234 | 1 | 1 | 1 |
| Huile MES (2) | 15 | 15 | 15 |
| Résine (3) | 15 | 15 | 15 |
| Agent de couplage (4) | 6,4 | 6,4 | 6,4 |
| ZnO | 2,5 | 2,5 | 2,5 |
| Acide stéarique | 2 | 2 | 2 |
| Anti-oxydant (5) | 1,9 | 1,9 | 1,9 |
| Cire anti-ozone "C32ST" (6) | 1,5 | 1,5 | 1,5 |
| Diphénylguanidine | 1,5 | 1,5 | 1,5 |
| Soufre | 1,2 | 1,2 | 1,2 |

(suite)

| | Exemples | | Exemple comparatif |
|---|---|---|---|
| Composition | **1** | **2** | **3** |
| Sulfénamide (7) | 2 | 2 | 2 |

(1) Silice "Zeosil 1165MP" de Rhodia.
(2) Catenex® SBR de Shell.
(3) Résine Dercolyte L120 de DRT.
(4) "Si69" de Degussa.
(5) N-(1,3-dimethylbutyl)-N'-phenyl-p-phenylenediamine.
(6) Anti-ozone de Repsol.
(7) N-cyclohexyl-2-benzothiazylsulphenamide.

Les résultats de mesures des propriétés dynamiques sont exprimés dans le Tableau 5 qui suit:

**Tableau 5 :**

| | Exemples | | Exemple comparatif |
|---|---|---|---|
| Compositions | **1** | **2** | **3** |
| tan δ max 23°C | 0,197 | 0,203 | 0,217 |

On constate que les élastomères 1 et 2 présentent des valeurs de Cold Flow considérées comme suffisamment faibles pour limiter les problèmes de fluage, tout en minimisant en composition de caoutchouc renforcée la valeur de tan δ, exprimant une hystérèse réduite. A l'inverse, l'élastomère 3 présente une valeur de Cold Flow encore réduite, mais au détriment de l'hystérèse de la composition de caoutchouc renforcée le contenant. Le compromis fluage à froid des élastomères - hystérèse de la composition de caoutchouc les contenant est optimisé et tout à fait satisfaisant pour les élastomères 1 et 2 selon l'invention.

## Revendications

**1.** Elastomère diénique modifié composé :

a) d'au moins 55% en poids par rapport au poids total de l'élastomère diénique modifié, d'espèce couplée par un groupement fonctionnel porteur d'une fonction de formule -SiOR, dans laquelle R est un atome d'hydrogène ou un radical alkyle ayant 1 à 10 atomes de carbone, et éventuellement d'une autre fonction susceptible d'interagir avec une charge renforçante, le groupement étant lié aux deux branches de l'élastomère diénique par l'intermédiaire de l'atome de silicium,
b) de 5% en poids à 30% en poids par rapport au poids total de l'élastomère diénique modifié, d'espèce étoilée possédant trois branches élastomériques reliées à un même atome de silicium appartenant à un groupement fonctionnel porteur ou non d'une fonction susceptible d'interagir avec une charge renforçante,
c) d'un taux inférieur ou égal à 15% en poids par rapport au poids total de l'élastomère diénique modifié, d'espèce fonctionnalisée en extrémité de chaîne par un groupement fonctionnel porteur d'une fonction-$Si(OR)_2$, dans laquelle R est un atome d'hydrogène ou un radical alkyle ayant 1 à 10 atomes de carbone, et éventuellement d'une autre fonction susceptible d'interagir avec une charge renforçante, le groupement étant lié à l'élastomère diénique par l'intermédiaire de l'atome de silicium,
et
d) d'un taux inférieur ou égal à 15% en poids par rapport au poids total de l'élastomère diénique modifié d'élastomère diénique non fonctionnel,

lesdits élastomères diéniques a), b) c) et d) étant, avant modification de mêmes macrostructure et microstructure.

**2.** Elastomère selon la revendication 1 **caractérisé en ce qu'**il comprend de préférence au moins 10% en poids et au plus 25% en poids, de préférence encore au plus 20% en poids, par rapport au poids total de l'élastomère diénique modifié dudit élastomère diénique étoilé b).

3. Elastomère selon la revendication 1 ou 2, **caractérisé en ce qu'**il comprend un taux strictement supérieur à 0% en poids et inférieur à 10% en poids par rapport au poids total de l'élastomère diénique modifié dudit élastomère diénique non fonctionnel d).

4. Elastomère selon l'une quelconque des revendications précédentes, **caractérisé en ce qu'**il comprend un taux supérieur ou égal à 65% en poids par rapport au poids total de l'élastomère diénique modifié dudit élastomère diénique couplé a)

5. Elastomère selon l'une quelconque des revendications précédentes, **caractérisé en ce qu'**il comprend un taux inférieur ou égal à 10% en poids par rapport au poids total de l'élastomère diénique modifié de ladite espèce fonctionnalisée en extrémité de chaîne c).

6. Elastomère selon l'une quelconque des revendications précédentes, **caractérisé en ce que** la fonction susceptible d'interagir avec une charge renforçante est une fonction choisie parmi les amines primaires, secondaires ou tertiaires, cycliques ou non, les isocyanates, les imines, les cyano, les thiols, les carboxylates, les époxydes, les phosphines primaires, secondaires ou tertiaires.

7. Elastomère selon la revendication précédente, **caractérisé en ce que** la fonction susceptible d'interagir avec une charge renforçante est une fonction amine tertiaire, de préférence diéthylamine ou diméthylamine.

8. Elastomère selon l'une quelconque des revendications précédentes, **caractérisé en ce que** la fonction susceptible d'interagir avec une charge renforçante et l'atome de silicium lié à l'élastomère sont reliés entre eux par un groupement espaceur défini comme étant un radical hydrocarboné divalent, linéaire ou ramifiée, aliphatique en $C_1$-$C_{18}$, saturé ou non, cyclique ou non, ou un radical hydrocarboné divalent aromatique en $C_6$-$C_{18}$, et pouvant contenir un ou plusieurs radicaux aromatiques et/ou un ou plusieurs hétéroatomes.

9. Elastomère selon la revendication précédente, **caractérisé en ce que** le groupement espaceur est un radical hydrocarboné divalent linéaire aliphatique en $C_1$-$C_6$, préférentiellement le radical linéaire aliphatique en $C_3$.

10. Elastomère selon l'une quelconque des revendications précédentes **caractérisé en ce que** dans les formules -SiOR et -Si(OR)$_2$ représentant les fonctions alcoxysilanes des espèces a) et c), R est un radical alkyle ayant 1 à 4 atomes de carbone, de préférence méthyle ou éthyle.

11. Elastomère selon l'une quelconque des revendications précédentes **caractérisé en ce que** dans les formules -SiOR et -Si(OR)$_2$ représentant les fonctions alcoxysilanes des espèces a) et c), R est atome d'hydrogène.

12. Elastomère selon l'une quelconque des revendications précédentes **caractérisé en ce que** l'élastomère diénique est choisi parmi les polybutadiènes, les copolymères butadiène-styrène, les copolymères butadiène-isoprène, les copolymères isoprène-styrène, les terpolymères butadiène-styrène-isoprène et le polyisoprène de synthèse, de préférence un copolymère butadiène - styrène.

13. Procédé de synthèse d'un élastomère tel que défini dans l'une quelconque des revendications 1 à 12, **caractérisé en ce qu'**il comprend une étape de mélangeage d'au moins deux élastomères diéniques de même nature, modifiés par un même agent de fonctionnalisation, et présentant une composition différente, ces élastomères diéniques de compositions différentes étant obtenus en mettant en oeuvre une étape de modification, après une étape de polymérisation anionique, en faisant varier le rapport molaire de l'agent de fonctionnalisation à l'initiateur de polymérisation:

    - de 0,40 à 0,75, pour privilégier la formation d'espèces couplées
    - de 0,20 à 0,35, pour privilégier la formation d'espèces étoilées, et / ou
    - au moins égal à 0,75, pour privilégier la formation d'espèces fonctionnalisées en bout de chaîne,

    l'agent de fonctionnalisation répondant à la formule 1 suivante:

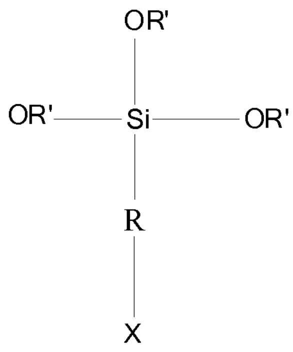

Formule 1

dans laquelle,

- R est un radical hydrocarboné divalent aliphatique, saturé ou non, cyclique ou non, en $C_1$-$C_{18}$, aromatique en $C_6$-$C_{18}$, de préférence un radical hydrocarboné divalent, linéaire ou ramifié, aliphatique en $C_1$-$C_{10}$, plus préférentiellement un radical hydrocarboné divalent linéaire aliphatique en $C_1$-$C_6$, plus préférentiellement encore le radical hydrocarboné linéaire en $C_3$.
- X est un atome d'hydrogène ou une fonction susceptible d'interagir avec une charge renforçante,
- les radicaux R', substitués ou non substitués, identiques ou différents, représentent un groupe alkyle en $C_1$-$C_{10}$, voire en $C_1$-$C_8$, de préférence un groupe alkyle en $C_1$-$C_4$, plus préférentiellement méthyle et éthyle.

**14.** Composition de caoutchouc renforcée à base d'au moins une charge renforçante et d'une matrice élastomère, **caractérisée en ce que** la matrice élastomère comprend au moins un élastomère diénique modifié tel que défini dans l'une quelconque des revendications 1 à 12.

**15.** Composition de caoutchouc renforcée selon la revendication 14, **caractérisée en ce que** la charge renforçante comprend au moins 50% en poids de silice par rapport au poids total de la charge renforçante.

**16.** Pneumatique **caractérisé en ce que** un de ses éléments constitutifs comprend une composition de caoutchouc, réticulable ou réticulée, telle que définie dans la revendication 14 ou 15.

**Patentansprüche**

**1.** Modifiziertes Dien-Elastomer, zusammengesetzt:

a) mindestens 55 Gewichts-%, bezogen auf das Gesamtgewicht des modifizierten Dien-Elastomers, einer Spezies, die mittels einer funktionellen Gruppe gekuppelt ist, welche einer Funktion der Formel -SiOR versehen ist, wobei R ein Wasserstoffatom oder ein Alkylrest mit 1 mit 10 Kohlenstoffatomen ist, sowie möglicherweise mit einer weiteren Funktion, die mit einem verstärkenden Füllstoff in Wechselwirkung treten kann, wobei die Gruppe über das Siliciumatom mit den beiden Zweigen des Dien-Elastomers verbunden ist,
b) aus 5 Gewichts-% bis 30 Gewichts-%, bezogen auf das Gesamtgewicht des modifizierten Dien-Elastomers, einer sternförmigen Spezies, die drei elastomerartige Zweige besitzt, welche an ein und dasselbe Siliciumatom gebunden sind, wobei dieses einer funktionellen Gruppe angehört, die mit einer Funktion versehen sein kann, welche mit einem verstärkenden Füllstoff in Wechselwirkung treten kann,
c) aus einem Gehalt von höchstens 15 Gewichts-%, bezogen auf das Gesamtgewicht des modifizierten Dien-Elastomers, einer Spezies, die am Kettenende über eine funktionelle Gruppe verfügt, welche mit einer Funktion der Formel - $Si(OR)_2$ versehen ist, wobei R ein Wasserstoffatom oder ein Alkylrest mit 1 mit 10 Kohlenstoffatomen ist, sowie möglicherweise mit einer weiteren Funktion, die mit einem verstärkenden Füllstoff in Wechselwirkung treten kann, wobei die Gruppe über das Siliciumatom mit dem Dien-Elastomer verbunden ist,
und
d) aus einem Gehalt von höchstens 15 Gewichts-%, bezogen auf das Gesamtgewicht des modifizierten Dien-Elastomers, eines Dien-Elastomers ohne funktionelle Gruppen,

wobei die Dien-Elastomere a), b), c) und d), bevor sie modifiziert werden, dieselbe Makrostruktur und Mikrostruktur aufweisen.

**2.** Elastomer nach Anspruch 1, **dadurch gekennzeichnet, dass** es vorzugsweise mindestens 10 Gewichts-% und höchstens 25 Gewichts-%, mit noch größerem Vorzug höchstens 20 Gewichts-%, bezogen auf das Gesamtgewicht des modifizierten Dien-Elastomers, von dem sternförmigen Dien-Elastomer b) umfasst.

**3.** Elastomer nach Anspruch 1 oder 2, **dadurch gekennzeichnet, dass** es einen Gehalt an dem Dien-Elastomer ohne funktionelle Gruppen d) umfasst, der streng mehr als 0 Gewichts-% und weniger als 10 Gewichts-% beträgt, bezogen auf das Gesamtgewicht des modifizierten Dien-Elastomers.

**4.** Elastomer nach einem beliebigen der vorhergehenden Ansprüche, **dadurch gekennzeichnet, dass** es einen Gehalt an dem gekuppelten Dien-Elastomer a) umfasst, der mindestens 65 Gewichts-% beträgt, bezogen auf das Gesamtgewicht des modifizierten Dien-Elastomers.

**5.** Elastomer nach einem beliebigen der vorhergehenden Ansprüche, **dadurch gekennzeichnet, dass** es einen Gehalt an der Spezies c) umfasst, welche am Kettenende über eine funktionellen Gruppe verfügt, der höchstens 10 Gewichts-% beträgt, bezogen auf das Gesamtgewicht des modifizierten Dien-Elastomers.

**6.** Elastomer nach einem beliebigen der vorhergehenden Ansprüche, **dadurch gekennzeichnet, dass** es sich bei der Funktion, welche mit einem verstärkenden Füllstoff in Wechselwirkung treten kann, um eine Funktion handelt, die aus den primäre, sekundären oder tertiären Aminen, welche zyklisch sein können, den Isocyanaten, den Iminen, den Cyanogruppen, den Thiolen, den Carboxylaten, den Epoxiden, den primären, sekundären oder tertiären Phosphinen ausgewählt ist.

**7.** Elastomer nach dem vorhergehenden Anspruch, **dadurch gekennzeichnet, dass** es sich bei der Funktion, welche mit einem verstärkenden Füllstoff in Wechselwirkung treten kann, um eine tertiäre Aminofunktion handelt, vorzugsweise um Diethylamin oder Dimethylamin.

**8.** Elastomer nach einem beliebigen der vorhergehenden Ansprüche, **dadurch gekennzeichnet, dass** die Funktion, welche mit einem verstärkenden Füllstoff in Wechselwirkung treten kann, und das mit dem Elastomer verbundene Siliciumatom untereinander durch eine Abstandsgruppe verbunden sind, wobei dieser Begriff einen zweibindigen $C_1$-$C_{18}$-Kohlenwasserstoffrest geradkettiger oder verzweigter Art bezeichnet, der gesättigt oder ungesättigt sein kann und der zyklisch sein kann oder nicht, oder einen zweibindigen aromatischen $C_6$-$C_{18}$-Kohlenwasserstoffrest, und sie einen oder mehrere aromatische Reste und/oder ein oder mehrere Heteroatome enthalten kann.

**9.** Elastomer nach dem vorhergehenden Anspruch, **dadurch gekennzeichnet, dass** es sich bei der Abstandsgruppe um einen zweibindigen aliphatischen geradkettigen $C_1$-$C_6$-Kohlenwasserstoffrest handelt, vorzugsweise um den aliphatischen geradkettigen $C_3$-Rest.

**10.** Elastomer nach einem beliebigen der vorhergehenden Ansprüche, **dadurch gekennzeichnet, dass** in den Formeln -SiOR und -Si(OR)$_2$, welche für die Alkoxysilanfunktionen der Spezies a) bis c) stehen, R für einen Alkylrest mit 1 bis 4 Kohlenstoffatomen steht, vorzugsweise für Methyl oder Ethyl.

**11.** Elastomer nach einem beliebigen der vorhergehenden Ansprüche, **dadurch gekennzeichnet, dass** in den Formeln -SiOR und -Si(OR)$_2$, welche für die Alkoxysilanfunktionen der Spezies a) bis c) stehen, R gleich einem Wasserstoffatom ist.

**12.** Elastomer nach einem beliebigen der vorhergehenden Ansprüche, **dadurch gekennzeichnet, dass** das Dien-Elastomer aus den Polybutadienen, den Butadien-Styrol-Copolymeren, den Butadien-Isopren-Copolymeren, den Isopren-Styrol-Copolymeren, den Butadien-Styrol-Isopren-Terpolymeren, und synthetischem Polyisopren ausgewählt ist, wobei es sich vorzugsweise um ein Butadien-Styrol-Copolymer handelt.

**13.** Verfahren zur Synthese eines Elastomers gemäß der Begriffsbestimmung in einem beliebigen der Ansprüche 1 bis 12, **dadurch gekennzeichnet, dass** es einen Schritt des Vermischens mindestens zweier Dien-Elastomere von gleicher Beschaffenheit umfasst, die durch dasselbe Mittel zur Einführung funktioneller Gruppen modifiziert wurden und eine verschiedenartige Zusammensetzung aufweisen, wobei diese Dien-Elastomere verschiedenartiger Zusammensetzung erhalten werden, indem nach einem Schritt der anionischen Polymerisation ein Modifizierungsschritt durchgeführt wird, in welchem das Molverhältnis zwischen dem Mittel zur Einführung funktioneller Gruppen und dem Polymerisationsinitiator folgendermaßen variiert wird:

- im Bereich von 0,40 bis 0,75, um die Bildung gekuppelter Spezies zu begünstigen
- im Bereich von 0,20 bis 0,35, um die Bildung sternförmiger Spezies zu begünstigen, und/oder
- 0,75 oder mehr, um die Bildung von Spezies zu begünstigen, die am Kettenende über eine funktionelle Gruppen verfügen,

wobei das Mittel zur Einführung funktioneller Gruppen der folgenden Formel 1 entspricht:

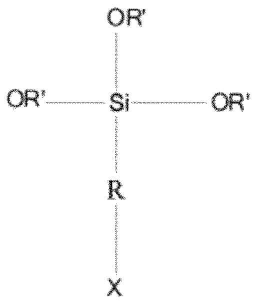

Formel 1

wobei

◦ R für einen zweibindigen aliphatischen Kohlenwasserstoffrest steht, der gesättigt oder ungesättigt sein kann und der zyklisch sein kann oder nicht, in $C_1$-$C_{18}$-Länge, oder aromatischer Art in $C_6$-$C_{18}$-Länge, vorzugsweise für einen zweibindigen aliphatischen $C_1$-$C_{10}$-Kohlenwasserstoff, der geradkettig oder verzweigt sein kann, mit größerem Vorzug für einen zweibindigen aliphatischen geradkettigen $C_1$-$C_6$-Kohlenwasserstoffrest, wiederum bevorzugt für den geradkettigen $C_3$-Kohlenwasserstoffrest.
◦ X für ein Wasserstoffatom oder eine Funktion steht, welche mit einem verstärkenden Füllstoff in Wechselwirkung treten kann,
◦ die Reste R', welche substituiert oder unsubstituiert sowie gleichartig oder verschiedenartig sein können, für eine $C_1$-$C_{10}$-oder sogar $C_1$-$C_8$-Alkylgruppe stehen, vorzugsweise für eine $C_1$-$C_4$-Alkylgruppe, wiederum bevorzugt für Methyl und Ethyl.

**14.** Verstärkte Kautschukzusammensetzung auf Basis mindestens eines verstärkenden Füllstoffs und einer Elastomermatrix, **dadurch gekennzeichnet, dass** die Elastomermatrix mindestens ein modifiziertes Dien-Elastomer gemäß der Begriffsbestimmung in einem beliebigen der Ansprüche 1 bis 12 umfasst.

**15.** Verstärkte Kautschukzusammensetzung nach Anspruch 14, **dadurch gekennzeichnet, dass** der verstärkende Füllstoff mindestens 50 Gewichts-% an Siliciumdioxid umfasst, bezogen auf das Gesamtgewicht des verstärkenden Füllstoffs.

**16.** Luftreifen, **dadurch gekennzeichnet, dass** einer von dessen Bestandteilen eine vernetzbare oder vernetzte Kautschukzusammensetzung gemäß der Begriffsbestimmung im Anspruch 14 oder 15 umfasst.

## Claims

**1.** Modified diene elastomer composed:

a) at least 55% by weight, with respect to the total weight of the modified diene elastomer, of entity coupled by a functional group bearing a function of formula -SiOR, in which R is a hydrogen atom or an alkyl radical having from 1 to 10 carbon atoms, and optionally bearing another function capable of interacting with a reinforcing filler, the group being bonded to the two branches of the diene elastomer via the silicon atom,
b) of from 5% by weight to 30% by weight, with respect to the total weight of the modified diene elastomer, of

star-branched entity having three elastomeric branches connected to one and the same silicon atom belonging to a functional group bearing or not bearing a function capable of interacting with a reinforcing filler,
c) of a content of less than or equal to 15% by weight, with respect to the total weight of the modified diene elastomer, of entity functionalized at the chain end by a functional group bearing a function $-Si(OR)_2$, in which R is a hydrogen atom or an alkyl radical having from 1 to 10 carbon atoms, and optionally bearing another function capable of interacting with a reinforcing filler, the group being bonded to the diene elastomer via the silicon atom, and
d) of a content of less than or equal to 15% by weight, with respect to the total weight of the modified diene elastomer, of non-functional diene elastomer,

the said diene elastomers a), b), c) and d) being, before modification, of the same macrostructure and the same microstructure.

2. Elastomer according to Claim 1, **characterized in that** it preferably comprises at least 10% by weight and at most 25% by weight, more preferably at most 20% by weight, with respect to the total weight of the modified diene elastomer, of the said star-branched diene elastomer b).

3. Elastomer according to Claim 1 or 2, **characterized in that** it comprises a content strictly of greater than 0% by weight and less than 10% by weight, with respect to the total weight of the modified diene elastomer, of the said non-functional diene elastomer d).

4. Elastomer according to any one of the preceding claims, **characterized in that** it comprises a content of greater than or equal to 65% by weight, with respect to the total weight of the modified diene elastomer, of the said coupled diene elastomer a).

5. Elastomer according to any one of the preceding claims, **characterized in that** it comprises a content of less than or equal to 10% by weight, with respect to the total weight of the modified diene elastomer, of the said entity functionalized at the chain end c).

6. Elastomer according to any one of the preceding claims, **characterized in that** the function capable of interacting with a reinforcing filler is a function chosen from primary, secondary or tertiary and cyclic or non-cyclic amines, isocyanates, imines, cyanos, thiols, carboxylates, epoxides or primary, secondary or tertiary phosphines.

7. Elastomer according to the preceding claim, **characterized in that** the function capable of interacting with a reinforcing filler is a tertiary amine function, preferably a diethylamine or dimethylamine function.

8. Elastomer according to any one of the preceding claims, **characterized in that** the function capable of interacting with a reinforcing filler and the silicon atom bonded to the elastomer are connected to one another via a spacer group defined as being a saturated or unsaturated, cyclic or non-cyclic, linear or branched, divalent $C_1$-$C_{18}$ aliphatic hydrocarbon radical or a divalent $C_6$-$C_{18}$ aromatic hydrocarbon radical and can comprise one or more aromatic radicals and/or one or more heteroatoms.

9. Elastomer according to the preceding claim, **characterized in that** the spacer group is a linear divalent $C_1$-$C_6$ aliphatic hydrocarbon radical, preferably the linear $C_3$ aliphatic radical.

10. Elastomer according to any one of the preceding claims, **characterized in that**, in the formulae -SiOR and $-Si(OR)_2$ representing the alkoxysilane functions of the entities a) and c), R is an alkyl radical having from 1 to 4 carbon atoms, preferably a methyl or ethyl radical.

11. Elastomer according to any one of the preceding claims, **characterized in that**, in the formulae -SiOR and $-Si(OR)_2$ representing the alkoxysilane functions of the entities a) and c), R is a hydrogen atom.

12. Elastomer according to any one of the preceding claims, **characterized in that** the diene elastomer is chosen from polybutadienes, butadiene/styrene copolymers, butadiene/isoprene copolymers, isoprene/styrene copolymers, butadiene/styrene/isoprene terpolymers and synthetic polyisoprene, preferably a butadiene/styrene copolymer.

13. Process for the synthesis of an elastomer as defined in any one of Claims 1 to 12, **characterized in that** it comprises a stage of mixing at least two diene elastomers of the same nature, which are modified by one and the same

functionalization agent, and exhibiting a different composition, these diene elastomers of different compositions being obtained by carrying out a modification stage, after an anionic polymerization stage, while varying the molar ratio of the functionalization agent to the polymerization initiator:

- from 0.40 to 0.75, in order to favour the formation of coupled entities,
- from 0.20 to 0.35, in order to favour the formation of star-branched entities, and/or
- at least equal to 0.75, in order to favour the formation of entities functionalized at the chain end,

the functionalization agent corresponding to the following formula 1:

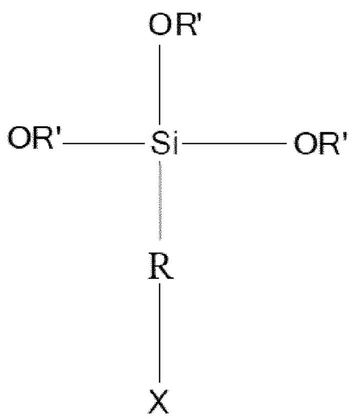

Formula 1

in which:

◦ R is a saturated or unsaturated, cyclic or non-cyclic, divalent $C_1$-$C_{18}$ aliphatic hydrocarbon radical or divalent $C_6$-$C_{18}$ aromatic hydrocarbon radical, preferably a linear or branched, divalent $C_1$-$C_{10}$ aliphatic hydrocarbon radical, more preferably a linear divalent $C_1$-$C_6$ aliphatic hydrocarbon radical and more preferably still the linear $C_3$ hydrocarbon radical,
◦ X is a hydrogen atom or a function capable of interacting with a reinforcing filler,
◦ the R' radicals, which are substituted or unsubstituted and identical or different, represent a $C_1$-$C_{10}$, indeed even $C_1$-$C_8$, alkyl group, preferably a $C_1$-$C_4$ alkyl group, more preferably methyl and ethyl.

**14.** Reinforced rubber composition based on at least one reinforcing filler and on an elastomer matrix, **characterized in that** the elastomer matrix comprises at least one modified diene elastomer as defined in any one of Claims 1 to 12.

**15.** Reinforced rubber composition according to Claim 14, **characterized in that** the reinforcing filler comprises at least 50% by weight of silica, with respect to the total weight of the reinforcing filler.

**16.** Tyre, **characterized in that** one of its constituent elements comprises a crosslinkable or crosslinked rubber composition as defined in Claim 14 or 15.

# Fig. 1

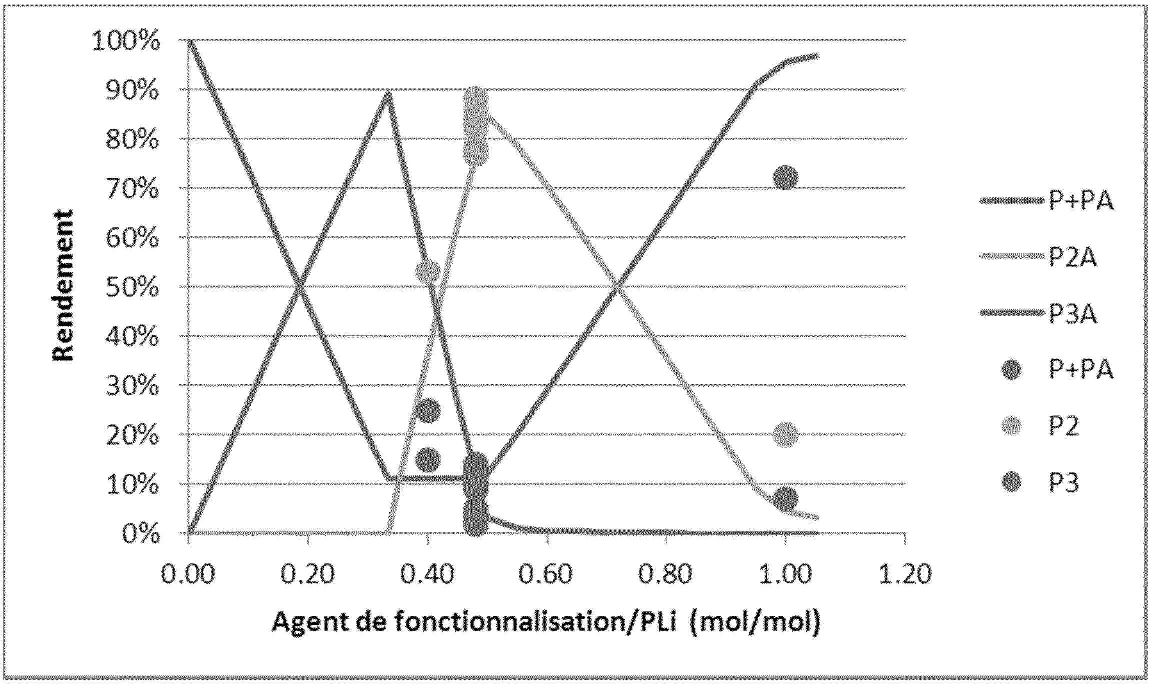
100%
90%
80%
70%
60%
50%
40%
30%
20%
10%
0%
Rendement
0.00
0.20
0.40
0.60
0.80
1.00
1.20
Agent de fonctionnalisation/PLi (mol/mol)
P+PA
P2A
P3A
P+PA
P2
P3

# Fig. 2

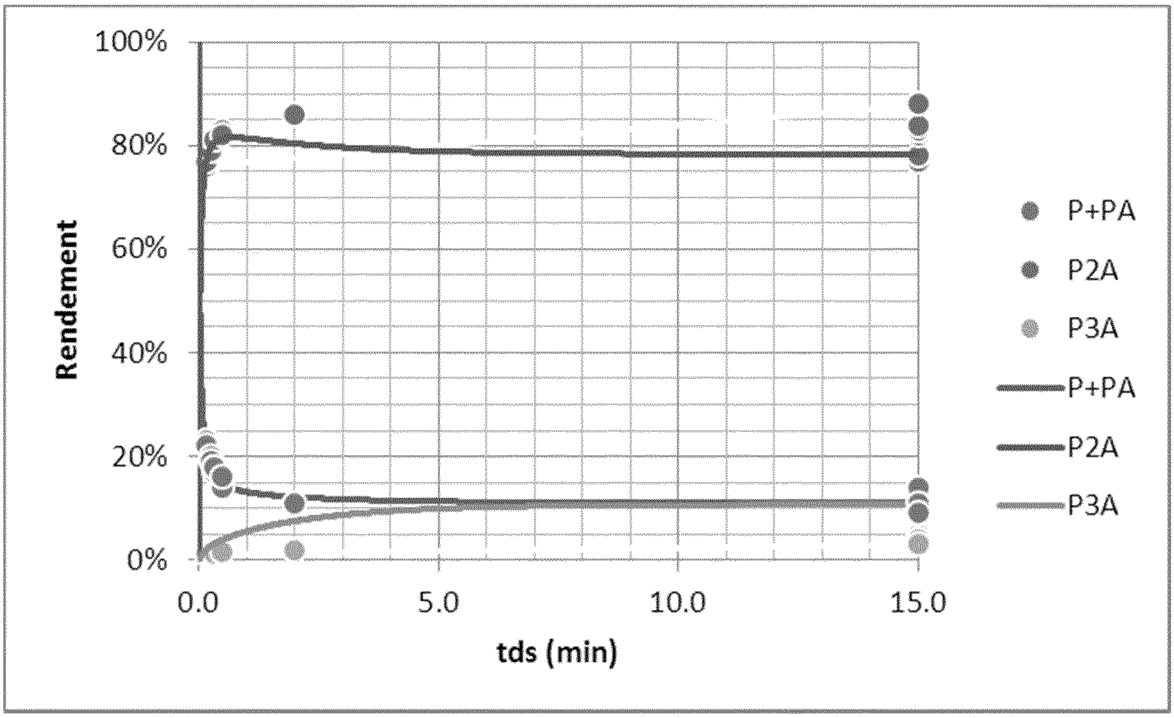
100%
80%
60%
40%
20%
0%
Rendement
0.0
5.0
10.0
15.0
tds (min)
P+PA
P2A
P3A
P+PA
P2A
P3A

# Fig. 3

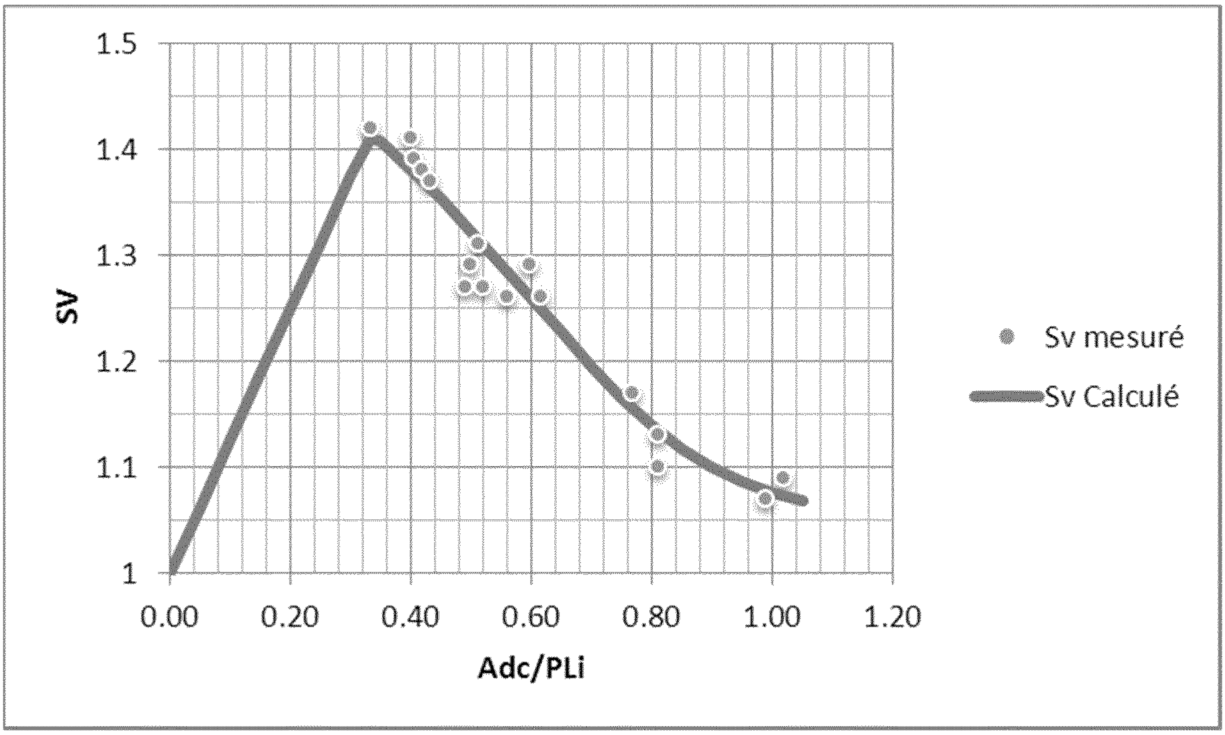
1.5
1.4
1.3
1.2
1.1
1
SV
0.00
0.20
0.40
0.60
0.80
1.00
1.20
Adc/PLi
Sv mesuré
Sv Calculé

# Fig. 4

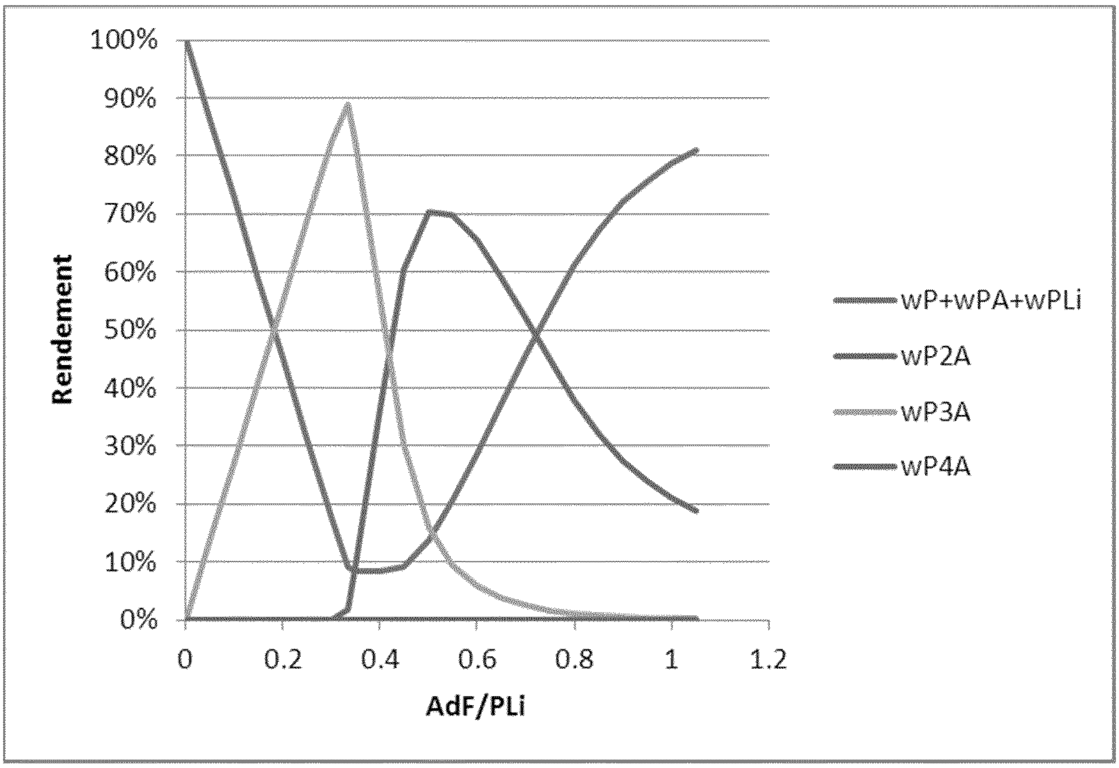
100%
90%
80%
70%
60%
50%
40%
30%
20%
10%
0%
Rendement
0
0.2
0.4
0.6
0.8
1
1.2
AdF/PLi
wP+wPA+wPLi
wP2A
wP3A
wP4A

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5066721 A
- EP 0299074 A
- FR 2930554
- US 20080319151 A
- EP 0992537 A
- US 20050203251 A
- WO 2009133068 A1
- WO 2009077837 A
- WO 2011042507 A
- EP 2266819 A1
- US 6610261 B
- US 6747087 B
- WO 9637547 A
- WO 9928380 A
- WO 2006069792 A
- WO 2006069793 A
- WO 2008003434 A
- WO 2008003435 A
- WO 0210269 A
- WO 2005087859 A
- WO 2006061064 A
- WO 2007017060 A


### Littérature non-brevet citée dans la description


- **VILLERMEAUX, J.** *Génie de la réaction chimique,* 1993
- **T. W. GREEN ; P. G. M. WUTS.** Protective Groups in Organic Synthesis. 1999
- **VILMIN, F. ; DUSSAP, C. ; COSTE, N.** *Applied Spectroscopy,* 2006, vol. 60, 619-29